# EUROPEAN PATENT APPLICATION

(11) **EP 4 053 003 A1**
(43) Date of publication of application: **07.09.2022**
(21) Application number: 20902902.4
(22) Date of filing: 17.12.2020
(51) Int. Cl.: B62D 61/10, B62B 3/02

(54) **VEHICLE**

(30) Priority: 19.12.2019 WO PCT/JP2019/049794
(71) Applicant: Yamaha Hatsudoki Kabushiki Kaisha, Iwata-shi, Shizuoka 438-8501 (JP); Pigeon Corporation, Chuo-ku, Tokyo 103-8480 (JP)
(72) Inventor: HANDA Takeshi, Iwata-shi, Shizuoka 438-8501 (JP); HIRAYAMA Yosuke, Iwata-shi, Shizuoka 438-8501 (JP); UCHIYAMA Toshifumi, Iwata-shi, Shizuoka 438-8501 (JP); TSUDA Kenichiro, Tokyo 103-8480 (JP)
(74) Representative: Stöckeler, Ferdinand
(86) International application number: PCT/JP2020/047298
(87) International publication number: WO 2021/125302

(57) **Abstract**

Provided is a vehicle including a left rear wheel and a right rear wheel whose traveling direction is fixed in a front-rear direction, a left front wheel, and a right front wheel and capable of further suppressing a force exerted on a vehicle body while maintaining contact between an uneven road surface and the wheels. A vehicle 1 includes a left front wheel 31 and a right front wheel 32 supported by a vehicle body 2 and each rotatable about a left turning axis PL and a right turning axis PR extending in a top-bottom direction, and a linkage mechanism 5 configured to be deformed such that the left front wheel 31 and the right front wheel 32 do not lean in the left direction or in the right direction when the left front wheel 31 or the right front wheel 32 is displaced upward or downward with respect to the vehicle body 2. The linkage mechanism 5 is a parallel four-bar linkage mechanism. The vehicle 1 is configured such that when one of the left front wheel 31 or the right front wheel 32 rides on an obstacle in a traveling direction in a state where the left front wheel 31 and the right front wheel 32 rotate about the left turning axis PL and the right turning axis PR during leftward or rightward turning of the vehicle 1, the left front wheel 31, the right front wheel 32, a left rear wheel 41, and a right rear wheel 42 are kept in upright states with respect to the vehicle body, and the vehicle body 2, the left turning axis PL, and the right turning axis PR do not lean.

## Description

### TECHNICAL FIELD

The present teaching relates to a vehicle.

### BACKGROUND ART

A vehicle known to date includes a vehicle body that stands on its own while the vehicle is stopped and does not lean while the vehicle is turning on a flat road surface, left and right rear wheels which are supported by the vehicle body and whose traveling direction is fixed in the front-rear direction, and left and right front wheels supported by the vehicle body.

As such a vehicle, Patent Document 1, for example, discloses a vehicle in which caster left and right front wheels are disposed at the left and right ends of an axle that swings about a horizontal axis extending in the front-rear direction of the vehicle.

As such a vehicle as described above, Patent Document 2, for example, discloses a vehicle in which caster left and right front wheels are disposed at the left and right ends of a connection element that swings about a turning axis extending in the front upward direction and the rear downward direction of the vehicle.

In addition, as such a vehicle as described above, Patent Document 3, for example, discloses a vehicle in which a support shaft supporting left and right front wheels is rotatable about a turning axis extending in the top-bottom direction at the center of the vehicle body in the left-right direction.

### CITATION LIST

### PATENT DOCUMENT

Patent Document 1: German Utility Model Publication No. 202004012083
Patent Document 2: European Patent No. 1842759
Patent Document 3: German Patent Publication No. 19829076

### SUMMARY OF INVENTION

### TECHNICAL PROBLEM

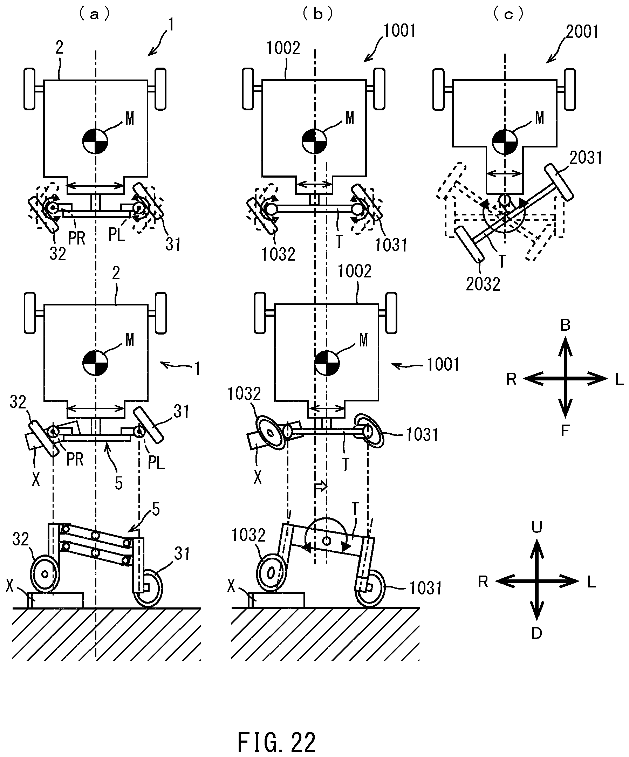

FIG. 22(b) schematically illustrates a vehicle 1001 in which left and right front wheels 1031 and 1032 are rotatable about a turning axis extending in the top-bottom direction and a coupling member T coupling the left and right front wheels 1031 and 1032 rotates about a rotation axis extending in the front-rear direction with respect to a vehicle body 1002, in a manner similar to the vehicles disclosed in Patent Documents 1 and 2. The top view in FIG. 22(b) schematically illustrates a state where the left and right front wheels 1031 and 1032 of the vehicle 1001 rotate about the turning axis. The second view from the top in FIG. 22(b) is a top view seen from above and showing a state where the right front wheel 1032 of the vehicle 1001 rides on an obstacle X in a traveling direction of the vehicle 1001. The bottom view of FIG. 22(b) is a front view showing the left and right front wheels 1031 and 1032 of the vehicle 1001 in the state of FIG. 22(b). In FIG. 22(b), character M denotes a barycenter of the vehicle 1001.

As illustrated in FIG. 22(b), in the vehicle 1001 as disclosed in Patent Documents 1 and 2, when the right front wheel 1032 rides on the obstacle X in the traveling direction of the vehicle 1001 during turning of the vehicle 1001, the barycenter of the vehicle 1001 moves leftward (see the white arrow in FIG. 22(b)), and the coupling member T rotates about the rotation axis in the top-bottom direction (see the arrow in the bottom view in FIG. 22(b)). Accordingly, the vehicle 1001 swings in the left direction or in the right direction (rolls).

In a manner similar to the vehicle disclosed in Patent Document 3, in a vehicle in which a coupling shaft coupling left and right front wheels rotates about a turning axis extending in the top-bottom direction at the center of a vehicle body in the left-right direction, when one of the left or right front wheels rides on an obstacle in the traveling direction of the vehicle during turning of the vehicle, the barycenter of the vehicle moves in the left direction or in the right direction, and the coupling member rotates in the front-rear direction about the turning axis. Accordingly, the vehicle also swings in the left direction or in the right direction (rolls).

As disclosed in Patent Documents 1 through 3, in a vehicle including a left rear wheel, a right rear wheel, a left front wheel, and a right front wheel, there is a demand for effectively using space under a vehicle body and between the four wheels (hereinafter referred to as a lower space). Since the lower space is located under the vehicle body as described above, in a case where the vehicle is a baby carriage, baggage can be accommodated in the lower space, and in a case where the vehicle is another vehicle, parts or the like can be disposed in the lower space, for example.

However, in the vehicle disclosed in Patent Document 3 in which the coupling shaft coupling the left and right front wheels rotates about the turning axis extending in the top-bottom direction at the center of the vehicle body in the left-right direction, the left and right front wheels rotate in the front-rear direction about the turning axis extending in the top-bottom direction during turning of the vehicle. FIG. 22(c) schematically illustrates a vehicle 2001 as disclosed in Patent Document 3. FIG. 22(c) is a top view of the vehicle 2001 seen from above. In FIG. 22(c), character M denotes a barycenter of the vehicle 2001.

As indicated by solid arrows in FIG. 22(c), in the vehicle 2001 as disclosed in Patent Document 3, the coupling shaft T coupling left and right front wheels 2031 and 2032 rotates in the front-rear direction about the turning axis extending in the top-bottom direction during turning of the vehicle 2001. Thus, the position and size of the lower space are restricted not to interfere with the left and right front wheels 2031 and 2032 during turning of the vehicle 2001.

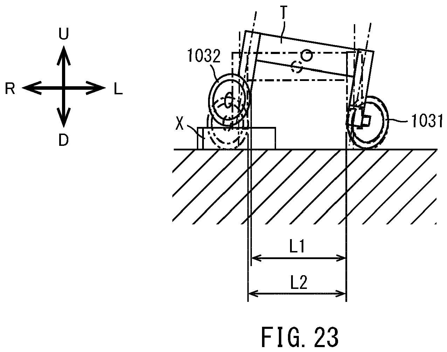

As illustrated in FIG. 22(b), in the vehicle 1001 as disclosed in Patent Documents 1 and 2, during turning of the vehicle 1001, the left and right front wheels 1031 and 1032 lean in the left direction or in the right direction when the vehicle 1001 is seen from the front. During turning of the vehicle 1001, when the right front wheel 1032 rides on the obstacle X in the traveling direction of the vehicle 1001, the left and right front wheels 1031 and 1032 and the coupling shaft T rotate in an arc shape about a ground point of the left front wheel 1031 when the vehicle 1001 is seen from the front (see FIG. 22(b)). In the vehicle 1001, causing such a behavior, as illustrated in FIG. 23, when the vehicle 1001 is seen from the front, a minimum distance L1 in the left-right direction between the left and right front wheels 1031 and 1032 (indicated by the solid line in FIG. 23) when one of the left or right front wheels 1031 and 1032 rides on the obstacle X in the traveling direction during turning of the vehicle 1001 is smaller than a minimum distance L2 in the left-right direction between the left and right front wheels 1031 and 1032 (indicated by the dot-dash line in FIG. 23) while the vehicle 1001 travels straight ahead.

Thus, in the vehicles as disclosed in Patent Documents 1 and 2, the position and size of the lower space are restricted not to interfere with the left and right front wheels when one of the left or right front wheels rides on an obstacle in the traveling direction of the vehicle during turning of the vehicle.

On the other hand, it is required to increase flexibility of the lower space formed under a vehicle body and between four wheels. In addition, as described above, in the vehicles disclosed in Patent Documents 1 through 3, when one of the left or right front wheels rides on an obstacle in the traveling direction during turning of the vehicle, the vehicle rolls in the left direction or in the right direction.

In view of this, in the vehicle including left and right rear wheels whose traveling direction is fixed in the front-rear direction, and left and right front wheels each rotatable about the turning axis extending in the top-bottom direction, the vehicle is required to have a configuration that can increase flexibility of the lower space formed under the vehicle body and between the four wheels and can prevent rolls when one of the left front wheel or the right front wheel rides on an obstacle in the traveling direction during turning of the vehicle.

It is therefore an object of the present teaching to provide a vehicle including left and right rear wheels whose traveling direction is fixed in a front-rear direction and left and right front wheels each rotatable about a turning axis extending in a top-bottom direction, and having a configuration that can increase flexibility of a lower space formed under a vehicle body and between the four wheels and can prevent rolls when one of the left front wheel or the right front wheel rides on an obstacle in a traveling direction during turning of the vehicle.

### SOLUTION TO PROBLEM

Inventors of the present teaching studied a configuration that can increase flexibility of a lower space formed under a vehicle body and between four wheels and can prevent rolls when one of a left front wheel or a right front wheel rides on an obstacle in a traveling direction during turning of a vehicle that includes a left rear wheel and a right rear wheel whose traveling direction is fixed in a front-rear direction and the left front wheel and the right front wheel each rotatable about a turning axis extending in a top-bottom direction. Through an intensive study, the inventors have reached the following configuration.

A vehicle according to one embodiment of the present teaching is a vehicle including a vehicle body configured to stand on its own while the vehicle is stopped and configured not to lean while the vehicle is turning, on a flat road surface, a left rear wheel and a right rear wheel supported by the vehicle body, a traveling direction of each of the left rear wheel and the right rear wheel being fixed in a front-rear direction, and a left front wheel and a right front wheel supported by the vehicle body and each configured to be rotatable about a turning axis extending in a top-bottom direction. The vehicle includes a wheel-tilt-suppressing mechanism including a first swing lever that is a member extending in a left-right direction, the first swing lever having a center portion in the left-right direction supported by the vehicle body to be swingable about a first-center-swing axis, the first-center-swing axis extending in the front-rear direction of the vehicle body, a second swing lever that is a member extending in the left-right direction, the second swing lever having a center portion in the left-right direction located below the first swing lever and supported by the vehicle body, to be swingable about a second-center-swing axis, the second-center-swing axis extending in the front-rear direction of the vehicle body, a left-front-wheel support that is a member extending in the top-bottom direction, the left-front-wheel support being supported by a left end portion of the first swing lever to be swingable about a first-left-swing axis extending in the front-rear direction of the vehicle body, the left-front-wheel support being supported by a left end portion of the second swing lever to be swingable about a second-left-swing axis extending in the front-rear direction of the vehicle body, the left-front-wheel support supporting the left front wheel, and a right-front-wheel support that is a member extending in the top-bottom direction, the right-front-wheel support being supported by a right end portion of the first swing lever to be swingable about a first-right-swing axis extending in the front-rear direction of the vehicle body, the right-front-wheel support being supported by a right end portion of the second swing lever to be swingable about a second-right-swing axis extending in the front-rear direction of the vehicle body, the right-front-wheel support supporting the right front wheel. The wheel-tilt-suppressing mechanism is configured to deform such that the left front wheel and the right front wheel do not lean in a left direction or in a right direction when the left front wheel or the right front wheel is displaced upward or downward with respect to the vehicle body. The vehicle is configured such that in a case where one of the left front wheel or the right front wheel rides on an obstacle in a traveling direction in a state where each of the left front wheel and the right front wheel is rotating about the turning axis during leftward or rightward turning of the vehicle, the left front wheel, the right front wheel, the left rear wheel, and the right rear wheel are kept in upright states with respect to the vehicle body and the vehicle body and the turning axis do not lean.

The traveling direction of the left rear wheel and the right rear wheel is fixed in the front-rear direction, whereas each of the left front wheel and the right front wheel is rotatable about the turning axis extending in the top-bottom direction. The left front wheel and the right front wheel are supported by the wheel-tilt-suppressing mechanism configured to deform such that the left front wheel and the right front wheel do not lean in the left direction or in the right direction when the left front wheel or the right front wheel is displaced upward or downward with respect to the vehicle body. Accordingly, the vehicle is configured such that in a case where one of the left front wheel or the right front wheel rides on an obstacle in a traveling direction in a state where each of the left front wheel and the right front wheel is rotating about the turning axis during leftward or rightward turning of the vehicle, the left front wheel, the right front wheel, the left rear wheel, and the right rear wheel are kept in upright states with respect to the vehicle body and the vehicle body and the turning axis do not lean.

Thus, in the case where one of the left front wheel or the right front wheel rides on an obstacle in the traveling direction in the state where each of the left front wheel and the right front wheel is rotating about the turning axis during leftward or rightward turning of the vehicle, the vehicle body of the vehicle does not roll in the left direction or in the right direction.

In addition, while the vehicle turns in the left direction or in the right direction as described above, each of the left front wheel and the right front wheel rotates about the turning axis extending in the top-bottom direction. Accordingly, a displacement amount of the left front wheel and the right front wheel in the front-rear direction is smaller than a displacement amount in the front-rear direction in the vehicle disclosed in Patent Document 3.

In addition, as described above, the left front wheel and the right front wheel are displaced upward or downward while being kept in the upright states by the wheel-tilt-suppressing mechanism. Accordingly, even in the case where one of the left front wheel or the right front wheel rides on an obstacle in the traveling direction in the state where each of the left front wheel and the right front wheel is rotating about the turning axis during leftward or rightward turning of the vehicle, the distance between the left front wheel and the right front wheel in the left-right direction is less likely to be smaller than those in the vehicles described in Patent Documents 1 and 2.

As described above, the configuration described above can prevent restriction of the position and size of the lower space located under the vehicle body not to interfere with the left front wheel and the right front wheel while the vehicle turns or in the case where one of the left front wheel or the right front wheel rides on an obstacle in the traveling direction during turning of the vehicle. As a result, flexibility of the lower space formed under the vehicle body and between the four wheels can be increased.

In this manner, in the vehicle including left and right rear wheels whose traveling direction is fixed in the front-rear direction, and left and right front wheels each rotatable about the turning axis extending in the top-bottom direction, the vehicle can obtain the configuration that can increase flexibility of a lower space formed under the vehicle body and between the four wheels and can prevent rolls when one of the left front wheel or the right front wheel rides on an obstacle in the traveling direction during turning of the vehicle.

The wheel-tilt-suppressing mechanism is not a mechanism for leaning the vehicle body of the vehicle but a mechanism for absorbing or reducing an impact on the left front wheel or the right front wheel to suppress leaning of the vehicle body of the vehicle in the left direction or in the right direction. Accordingly, in the vehicle including the wheel-tilt-suppressing mechanism, leaning of the vehicle body in the left direction or in the right direction is suppressed.

In a case where one of the left front wheel or the right front wheel located forward of the barycenter of the vehicle is brought into contact with an obstacle in the traveling direction, the vehicle causes forward rotation about a contact point between the obstacle and the wheel in contact with the obstacle, and is likely to roll in the left direction or in the right direction when the wheel in contact with the obstacle rides on the obstacle. On the other hand, since the left front wheel and the right front wheel are supported by the wheel-tilt-suppressing mechanism, forward rotation of the vehicle about the contact point between one of the wheels and the obstacle and rolls of the vehicle in the left direction or in the right direction as described above can be suppressed.

In another aspect, the vehicle according to the present teaching preferably includes the following configuration. Each of the left-front-wheel support and the right-front-wheel support is movable in the top-bottom direction with respect to the vehicle body.

Accordingly, when one of the left front wheel or the right front wheel rides on an obstacle in the traveling direction, the left front wheel supported by the left-front-wheel support and the right front wheel supported by the right-front-wheel support can be smoothly moved in the top-bottom direction with respect to the vehicle body.

Consequently, in the vehicle including the left and right rear wheels whose traveling direction is fixed in the front-rear direction, and the left and right front wheels each rotatable about the turning axis extending in the top-bottom direction, the vehicle can obtain the configuration that can increase flexibility of a lower space formed under the vehicle body and between the four wheels and can prevent rolls when one of the left front wheel or the right front wheel rides on an obstacle in the traveling direction during turning of the vehicle.

In another aspect, the vehicle according to the present teaching preferably includes the following configuration. Each of the first-center-swing axis of the first swing lever and the second-center-swing axis of the second swing lever extends in the front-rear direction and in the top-bottom direction to gradually elevate from rear toward front of the vehicle body. The wheel-tilt-suppressing mechanism is configured to suppress conversion of a force input from a road surface to the left front wheel or the right front wheel to a force in the left-right direction and to allow conversion of the force input to the left front wheel or the right front wheel to an upward and rearward force.

With this configuration, when one of the left front wheel or the right front wheel rides on an obstacle in the traveling direction, conversion of a force input to the left front wheel or the right front wheel to a force in the left-right direction is suppressed, and the force input to the left front wheel or the right front wheel is converted to an upward and rearward force. Accordingly, it is possible to prevent a force of causing the left front and the right front wheel to lean in the left direction or in the right direction from being exerted on the vehicle body.

With the configuration described above, in the vehicle including the left and right rear wheels whose traveling direction is fixed in the front-rear direction, and the left and right front wheels each rotatable about the turning axis extending in the top-bottom direction, the vehicle can obtain the configuration that can increase flexibility of a lower space formed under the vehicle body and between the four wheels and can prevent rolls when one of the left front wheel or the right front wheel rides on an obstacle in the traveling direction during turning of the vehicle.

In another aspect, the vehicle according to the present teaching preferably includes the following configuration. The wheel-tilt-suppressing mechanism is configured such that when the vehicle is seen from the front, the left front wheel is located closer to the left rear wheel than the first-center-swing axis and the second-center-swing axis, and the right front wheel is located closer to the right rear wheel than the first-center-swing axis and the second-center-swing axis, and is configured to suppress a change in a distance between the left front wheel and the right front wheel in the left-right direction.

With this configuration, when the vehicle is seen from the front, the left front wheel can be disposed closer to the left rear wheel, and the right front wheel can be disposed closer to the right rear wheel. Thus, a vehicle resistant to rolls in the left-right direction can be obtained, as compared to a case where the left front wheel is close to the first-center-swing axis and the second-center-swing axis and a case where the right front wheel is close to the first-center-swing axis and the second-center-swing axis, when the vehicle is seen from the front.

In another aspect, the vehicle according to the present teaching preferably includes the following configuration. The first swing lever is supported by the vehicle body to be swingable about the first-center-swing axis without a biasing member for returning to a neutral position. The second swing lever is supported by the vehicle body to be swingable about the second-center-swing axis without a biasing member for returning to a neutral position.

This configuration eliminates an operation of returning the first swing lever and the second swing lever to neutral positions with a biasing member, and thus, swings of the vehicle due to swings of the first swing lever and the second swing lever can be reduced. That is, when one of the left front wheel or the right front wheel rides on an obstacle, followability of the left front wheel and the right front wheel to the obstacle can be enhanced.

With the configuration described above, the first swing lever and the second swing lever can be smoothly operated. Accordingly, it is possible to suppress transfer of a force exerted on the left front wheel and the right front wheel from the obstacle to the vehicle body.

Thus, with the configuration described above, in the vehicle including the left and right rear wheels whose traveling direction is fixed in the front-rear direction, and the left and right front wheels each rotatable about the turning axis extending in the top-bottom direction, the vehicle can obtain the configuration that can increase flexibility of a lower space formed under the vehicle body and between the four wheels and can prevent rolls when one of the left front wheel or the right front wheel rides on an obstacle in the traveling direction during turning of the vehicle.

In addition, since a biasing member is unnecessary, the number of parts of the wheel-tilt-suppressing mechanism can be reduced.

In another aspect, the vehicle according to the present teaching preferably includes the following configuration. The left front wheel is a caster left front wheel rotatable about a left turning axis extending in the top-bottom direction with respect to the vehicle body. The right front wheel is a caster right front wheel rotatable about a right turning axis extending in the top-bottom direction with respect to the vehicle body.

With this configuration, the vehicle can be smoothly turned left and right without leaning of the left front wheel and the right front wheel in the left direction or in the right direction.

In addition, the configuration described above makes it possible to easily obtain the left front wheel and the right front wheel each rotatable about the turning axis extending in the top-bottom direction.

Consequently, in the vehicle including the left and right rear wheels whose traveling direction is fixed in the front-rear direction, and the left and right front wheels each rotatable about the turning axis extending in the top-bottom direction, the vehicle can easily obtain the configuration that can increase flexibility of a lower space formed under the vehicle body and between the four wheels and can prevent rolls when one of the left front wheel or the right front wheel rides on an obstacle in the traveling direction during turning of the vehicle.

In another aspect, the vehicle according to the present teaching preferably includes the following configuration. The vehicle further includes a front-wheel-adjusting mechanism including an operation handle, the operation handle being operable by hand of an operator of the vehicle and connected to the wheel-tilt-suppressing mechanism such that the first swing lever and the second swing lever are caused to swing by an operation of the operator, the front-wheel-adjusting mechanism being configured to adjust a load applied to the left front wheel and the right front wheel or positions of the left front wheel and the right front wheel by causing the first swing lever and the second swing lever to swing by the operation of the operation handle by the operator.

The left front wheel and the right front wheel are supported to be displaceable upward or downward with respect to the vehicle body by the wheel-tilt-suppressing mechanism. When an operator of the vehicle operates the operation handle of the front-wheel-adjusting mechanism by hand to swing the first swing lever and the second swing lever of the wheel-tilt-suppressing mechanism, a load applied to the left front wheel and the right front wheel or the positions of the left front wheel and the right front wheel can be thereby adjusted.

Thus, when the left front wheel or the right front wheel of the vehicle is brought in contact with, for example, a step, the operator of the vehicle operates the operation handle of the front-wheel-adjusting mechanism by hand so that the first swing lever and the second swing lever of the wheel-tilt-suppressing mechanism are thereby caused to swing to lift the wheel in contact with the step. Accordingly, it is possible to adjust a load applied to the left front wheel and the right front wheel or the positions of the left front wheel and the right front wheel. Consequently, in a case where the vehicle goes over, for example, the step, the vehicle can easily go over the step.

In the manner described above, an environment in which the vehicle is usable can be enlarged.

In another aspect, the vehicle according to the present teaching preferably includes the following configuration. The operation handle includes a first operation handle and a second operation handle. The first operation handle is connected to a left portion of the first swing lever and a left portion of the second swing lever. The second operation handle is connected to a right portion of the first swing lever and a right portion of the second swing lever. The front-wheel-adjusting mechanism is configured to adjust a load applied to the left front wheel and the right front wheel or positions of the left front wheel and the right front wheel by causing the first swing lever and the second swing lever to swing by an operation of at least one of the first operation handle or the second operation handle by the operator.

With this configuration, when the operator of the vehicle operates at least one of the first operation handle or the second operation handle, the first swing lever and the second swing lever of wheel-tilt-suppressing mechanism are thereby caused to swing to adjust a load applied to the left front wheel and the right front wheel or the positions of the left front wheel and the right front wheel.

Accordingly, the configuration capable of increasing flexibility of a handle operation depending on the vehicle can be obtained. In addition, the configuration described above enables the operator of the vehicle to easily adjust a load applied to the left front wheel and the right front wheel or the positions of the left front wheel and the right front wheel depending on the environment in using the vehicle.

As a result, an environment in which the vehicle is usable can be enlarged.

In another aspect, the vehicle according to the present teaching preferably includes the following configuration. The front-wheel-adjusting mechanism is configured to move the left front wheel and the right front wheel in the top-bottom direction and in the front-rear direction by an operation of the operation handle by the operator.

With this configuration, it is possible to adjust a load applied to the left front wheel and the right front wheel or the positions of the left front wheel and the right front wheel by an operation of at least one of the first operation handle or the second operation handle by the operator of the vehicle.

As a result, an environment in which the vehicle is usable can be enlarged.

The terminology used herein is for the purpose of describing particular embodiments only and is not intended to be limiting of the invention.

As used herein, the term "and/or" includes any and all combinations of one or more of the associated listed items.

It will be further understood that the terms "including," "comprising" or "having" and variations thereof when used in this specification, specify the presence of stated features, steps, elements, components, and/or their equivalents but do not preclude the presence or addition of one or more steps, operations, elements, components, and/or groups thereof.

It will be further understood that the terms "mounted," "connected," "coupled," and/or their equivalents are used broadly and encompass both direct and indirect mounting, connecting and coupling. Further, "connected" and "coupled" are not restricted to physical or mechanical connections or couplings, and can include connections or couplings, whether direct or indirect.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques.

Accordingly, for the sake of clarity, this description will refrain from repeating every possible combination of the individual steps in an unnecessary fashion. Nevertheless, the specification and claims should be read with the understanding that such combinations are entirely within the scope of the invention and the claims.

An embodiment of a vehicle according to the present teaching will be herein described.

In the following description, for purposes of explanation, numerous specific details are set forth in order to provide a thorough understanding of the present invention. It will be evident, however, to one skilled in the art that the present invention may be practiced without these specific details.

The present disclosure is to be considered as an exemplification of the invention, and is not intended to limit the invention to the specific embodiments illustrated by the figures or description below.

### [Front Wheel]

A front wheel herein refers to one of a plurality of wheels of a vehicle located in a front portion of the vehicle in the traveling direction of the vehicle. The front and rear of the vehicle are defined depending on the traveling direction of the vehicle. In this manner, the front wheel herein is defined from the plurality of wheels of the vehicle based on the traveling direction of the vehicle. Thus, for example, in a case where the traveling mode of the vehicle is switchable between a first traveling mode in which the vehicle can travel in one direction and a second traveling mode in which the vehicle can travel in the opposite direction, the front portion and the rear portion of the vehicle are switched between the first traveling mode and the second traveling mode. Thus, a wheel-tilt-suppressing mechanism that supports the front wheels in the front portion of the vehicle in the first traveling mode of the vehicle supports the rear wheels in the rear portion of the vehicle in the second traveling mode of the vehicle, for example. A wheel-tilt-suppressing mechanism that supports the rear wheels in the rear portion of the vehicle in the first traveling mode of the vehicle supports the front wheels in the front portion of the vehicle in the second traveling mode of the vehicle, for example.

### [Upright State]

An upright state herein refers to a state where a rotation axis extends in parallel with a road surface with which each one of the left front wheel, the right front wheel, the left rear wheel, and the right rear wheel is in contact. The term "parallel" includes not only a state completely in parallel with the road surface but also a state where the rotation axis tilts relative to the road surface to such a degree that does not affect a leaning posture of the vehicle body in the left direction or in the right direction.

### [Neutral Position]

A neutral position of a first swing lever herein refers to a position of the first swing lever in a state where no force of swinging about a first-center-swing axis is applied to the first swing lever or a state where the first swing lever does not swing about the first-center-swing axis. Similarly, a neutral position of a second swing lever herein refers to a position of the second swing lever in a state where no force of swinging about a second-center-swing axis is applied to the second swing lever or a state where the second swing lever does not swing about the second-center-swing axis. The neutral position of the first swing lever includes a position of the first swing lever in a state where the first swing lever swings about the first-center-swing axis to such a degree that does not affect a leaning posture of the vehicle body in the left direction or in the right direction. The neutral position of the second swing lever includes a position of the second swing lever in a state where the second swing lever swings about the second-center-swing axis to such a degree that does not affect a leaning posture of the vehicle body in the left direction or in the right direction.

### [Caster Wheel]

A caster wheel herein refers to a wheel rotatable with respect to a vehicle body or a member supported by the vehicle body about a turning axis extending in the top-bottom direction.

### [Obstacle]

An obstacle herein refers to an object disposed on a road surface or integrated with the road surface such that when the left front wheel or the right front wheel of the vehicle rides on the obstacle in the traveling direction of the vehicle, the position of the left front wheel or the right front wheel in the top-bottom direction changes. The obstacle includes not only an obstacle disposed on the road surface but also a projection formed on the road surface, a peripheral portion of a recess formed on the road surface, a step on the road surface, and so forth. The road surface refers to a traveling surface on which the vehicle can travel.

### [Step]

A step herein refers to a portion of a road surface on which the vehicle travels whose height in the top-bottom direction changes stepwise. The step includes not only a portion of a road surface on which the vehicle travels and which is higher stepwise than the other portion, such as a curb, but also a portion of the road surface lower stepwise than the other surface, such as a pothole.

### ADVANTAGEOUS EFFECTS OF INVENTION

According to one embodiment of the present teaching, in a vehicle including left and right rear wheels whose traveling direction is fixed in a front-rear direction and left and right front wheels each rotatable about a turning axis extending in a top-bottom direction, it is possible to provide a configuration that can increase flexibility of a lower space formed under the vehicle body and between the four wheels and can prevent rolls of the vehicle when one of the left front wheel or the right front wheel rides on an obstacle in a traveling direction during turning of the vehicle.

### BRIEF DESCRIPTION OF DRAWINGS

[FIG. 1] FIG. 1 is a left side view schematically illustrating an overall configuration of a vehicle according to a first embodiment.
[FIG. 2] FIG. 2 is a front view schematically illustrating a configuration of a vehicle front portion when the vehicle is seen from the front.
[FIG. 3] FIG. 3 is a schematic view of an example of a caster left front wheel and a caster right front wheel, seen from above.
[FIG. 4] FIG. 4 is a schematic view of an example of a configuration in which the left front wheel and the right front wheel are coupled by a tie rod, seen from above.
[FIG. 5] FIG. 5 is a view corresponding to FIG. 2 and schematically illustrating an operation of a linkage mechanism in a case where the left front wheel of the vehicle is located above the right front wheel of the vehicle.
[FIG. 6] FIG. 6 is a view corresponding to FIG. 2 and schematically illustrating an operation of the linkage mechanism in a case where the right front wheel of the vehicle is located above the left front wheel of the vehicle.
[FIG. 7] FIG. 7 is a perspective view illustrating an overall configuration of a vehicle according to a second embodiment.
[FIG. 8] FIG. 8 is a view schematically illustrating a positional relationship between front wheels and rear wheels when the vehicle is seen from the front.
[FIG. 9] FIG. 9 is a view schematically illustrating a force exerted on a wheel from a step.
[FIG. 10] FIG. 10 is a perspective view illustrating an overall configuration of a vehicle according to a third embodiment.
[FIG. 11] FIG. 11 shows a front view and a left side view of the vehicle according to the first embodiment side by side.
[FIG. 12] FIG. 12 is a left side view schematically illustrating an overall configuration of a vehicle according to a fourth embodiment.
[FIG. 13] FIG. 13 is a front view schematically illustrating a configuration of a vehicle front portion when the vehicle is seen from the front.
[FIG. 14] FIG. 14 is a front view schematically illustrating an operation of a linkage mechanism in a case where the left front wheel of the vehicle is located above the right front wheel of the vehicle.
[FIG. 15] FIG. 15 is a front view schematically illustrating an operation of a linkage mechanism in a case where the right front wheel of the vehicle is located above the left front wheel of the vehicle.
[FIG. 16] FIG. 16 is a view schematically illustrating a state where, when the front wheel is brought into contact with a step, the front wheel is moved by a front-wheel-adjusting mechanism and the linkage mechanism.
[FIG. 17] FIG. 17 is a perspective view illustrating an overall configuration of a vehicle according to a fifth embodiment.
[FIG. 18] FIG. 18 is a view of a vehicle according to the fifth embodiment corresponding to FIG. 16.
[FIG. 19] FIG. 19 is a perspective view illustrating an overall configuration of a vehicle according to a sixth embodiment.
[FIG. 20] FIG. 20 is a view of a vehicle according to another embodiment corresponding to FIG. 13.
[FIG. 21] FIG. 21 is a view of a vehicle according to another embodiment corresponding to FIG. 13.
[FIG. 22] FIG. 22 illustrates (a) a vehicle according to an example of an embodiment and (b) a vehicle disclosed in Patent Document 1 or 2, each illustrating a top view seen from above, a top view seen from above and a front view seen from the front in a state where a right front wheel of each vehicle rides on an obstacle, and (c) a top view of a schematic configuration a vehicle disclosed in Patent Document 3, seen from above.
[FIG. 23] FIG. 23 is a schematic view seen from the front and illustrating an operation of left and right front wheels when the right front wheel of the vehicle illustrated in FIG. 22(b) rides on an obstacle.

### DESCRIPTION OF EMBODIMENT

Embodiments will be described hereinafter with reference to the drawings. In the drawings, the same or corresponding parts are denoted by the same reference numerals, and description thereof will not be repeated. The dimensions of components in the drawings do not strictly represent actual dimensions of the components and dimensional proportions of the components.

In the following description, arrow F in the drawings represents a forward direction of a vehicle 1. Arrow B in the drawings represents a rearward direction of the vehicle 1. Arrow U in the drawings represents an upward direction of the vehicle 1. Arrow D in the drawings represents a downward direction of the vehicle 1. Arrow R in the drawings represents a rightward direction of the vehicle 1. Arrow L in the drawings represents a leftward direction of the vehicle 1. In the following description, a traveling direction of the vehicle 1 will be referred to as a forward direction. Thus, a front-rear direction, a left-right direction, and a top-bottom direction of the vehicle 1 respectively refer to a front-rear direction, a left-right direction, and a top-bottom direction in a state where an operator of the vehicle 1 faces in the forward direction (traveling direction) of the vehicle 1.

### [First Embodiment]

### (Overall Configuration)

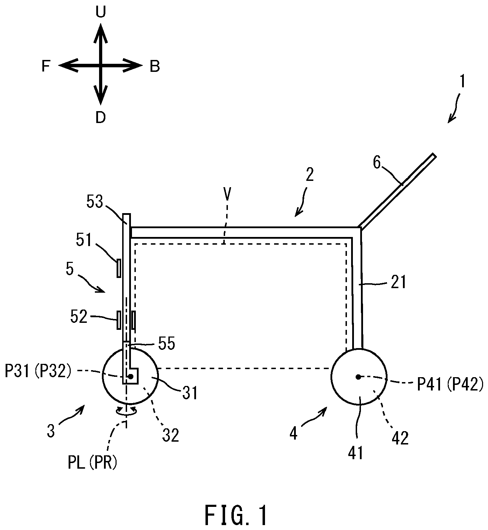

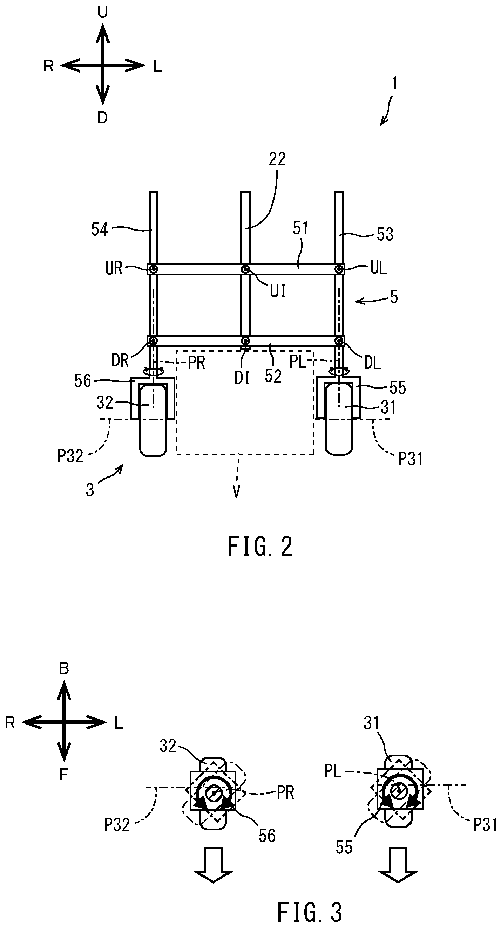

FIG. 1 is a view schematically illustrating a configuration of a vehicle 1 according to a first embodiment. FIG. 2 is a view schematically illustrating a configuration of a vehicle front portion when the vehicle 1 is seen from the front. The vehicle 1 includes a vehicle body 2, a pair of left and right front wheels 3, a pair of left and right rear wheels 4, a linkage mechanism 5 (wheel-tilt-suppressing mechanism), and an operation handle 6. In this embodiment, the vehicle 1 is a four-wheeled vehicle. The pair of left and right front wheels 3 is supported by the vehicle body 2 to be rotatable in the front-rear direction with the linkage mechanism 5 interposed therebetween. The pair of left and right rear wheels 4 is supported by the vehicle body 2 to be rotatable in the front-rear direction. The operation handle 6 is connected to the vehicle body 2. Components of the vehicle 1 will be described in detail later.

When the operator applies a forward force to the vehicle body 2 with the operation handle 6, the vehicle 1 thereby moves forward. When the operator applies a rearward force to the vehicle body 2 with the operation handle 6, the vehicle 1 thereby moves rearward. When the operator applies a leftward turning force to the vehicle body 2 with the operation handle 6, the vehicle 1 thereby turns leftward. When the operator applies a rightward turning force to the vehicle body 2 with the operation handle 6, the vehicle 1 thereby turns rightward.

That is, the vehicle 1 does not include a driving source. The vehicle 1 does not include a steering mechanism for steering at least one of the pair of left and right front wheels 3 or the pair of left and right rear wheels 4 with the operation handle 6.

The pair of left and right front wheels 3 includes a left front wheel 31 and a right front wheel 32. The left front wheel 31 is supported by the lower end portion of a left side member 53 of the linkage mechanism 5 described later to be rotatable about a left turning axis PL extending in the top-bottom direction. Specifically, the lower end portion of the left side member 53 is provided with a left-front-wheel-supporting part 55 rotatable about the left turning axis PL with respect to the left side member 53. A rotation angle range of each of the left front wheel 31 and the left-front-wheel-supporting part 55 may be 360 degrees or may be a range smaller than 360 degrees. The left front wheel 31 is supported by the left-front-wheel-supporting part 55 to be rotatable about a left-front-wheel-rotation axis P31 extending in parallel with the road surface.

The right front wheel 32 is supported by the lower end portion of a right side member 54 of the linkage mechanism 5 described later to be rotatable about a right turning axis PR extending in the top-bottom direction. Specifically, the lower end portion of the right side member 54 is provided with a right-front-wheel-supporting part 56 rotatable about the right turning axis PR with respect to the right side member 54. A rotation angle range of each of the right front wheel 32 and the right-front-wheel-supporting part 56 may be 360 degrees or may be a range smaller than 360 degrees. The right front wheel 32 is supported by the right-front-wheel-supporting part 56 to be rotatable about a right-front-wheel-rotation axis P32 extending in parallel with the road surface. The left front wheel 31 and the right front wheel 32 are disposed side by side in the left-right direction.

The left front wheel 31 and the right front wheel 32 may be caster wheels that are rotatable about turning axes (i.e., the left turning axis PL and the right turning axis PR) independently of each other. The left front wheel 31 and the right front wheel 32 may be coupled to each other by a tie rod 60.

FIG. 3 is a view illustrating an example of the caster left front wheel 31 and the caster right front wheel 32 when seen from above. FIG. 3 does not show the vehicle body 2 and other components, and only shows configurations of the caster left front wheel 31 and the caster right front wheel 32. In FIG. 3, a state where the left front wheel 31 rotates about the left turning axis PL and a state where the right front wheel 32 rotates about the right turning axis PR are indicated by dot-dash lines.

The left front wheel 31 is supported by the left side member 53 to be rotatable about the left turning axis PL with the left-front-wheel-supporting part 55 interposed therebetween. Specifically, the left-front-wheel-supporting part 55 supports the left front wheel 31 such that the left front wheel 31 is rotatable about the left-front-wheel-rotation axis P31 extending in parallel with the road surface. The left-front-wheel-supporting part 55 is supported by the left side member 53 to be rotatable about the left turning axis PL. The left turning axis PL is located at a position different from the left-front-wheel-rotation axis P31 in the front-rear direction of the vehicle 1. In the example illustrated in FIG. 3, the left turning axis PL is located forward of the left-front-wheel-rotation axis P31 in the front-rear direction of the vehicle 1. In the example illustrated in FIG. 3, the left-front-wheel-supporting part 55 has a U shape sandwiching the left front wheel 31 in the axial direction of the left-front-wheel-rotation axis P31.

A rod-shaped left-front-wheel-supporting part may be disposed between a pair of left front wheels 31. Alternatively, one left front wheel 31 may be supported by a rod-shaped left-front-wheel-supporting part to be rotatable about the left-front-wheel-rotation axis P31.

The right front wheel 32 is supported by the right side member 54 to be rotatable about the right turning axis PR with the right-front-wheel-supporting part 56 interposed therebetween. Specifically, the right-front-wheel-supporting part 56 supports the right front wheel 32 such that the right front wheel 32 is rotatable about the right-front-wheel-rotation axis P32 extending in parallel with the road surface. The right-front-wheel-supporting part 56 is supported by the right side member 54 to be rotatable about the right turning axis PR. The right turning axis PR is located at a position different from the right-front-wheel-rotation axis P32 in the front-rear direction of the vehicle 1. In the example illustrated in FIG. 3, the right turning axis PR is located forward of the right-front-wheel-rotation axis P32 in the front-rear direction of the vehicle 1. In the example illustrated in FIG. 3, the right-front-wheel supporting part 56 has a U shape sandwiching the right front wheel 32 in the axial direction of the right-front-wheel-rotation axis P32.

A rod-shaped right-front-wheel-supporting part may be disposed between a pair of right front wheels 32. Alternatively, one right front wheel 32 may be supported by a rod-shaped right-front-wheel-supporting part to be rotatable about the right-front-wheel-rotation axis P32.

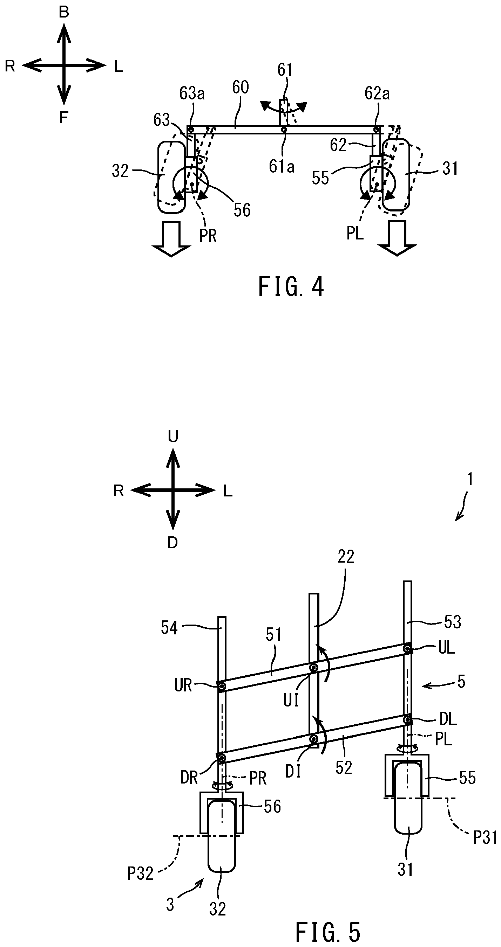

FIG. 4 illustrates an example of the left front wheel 31 and the right front wheel 32 coupled to each other in the left-right direction by the tie rod 60. The tie rod 60 is coupled to an intermediate joint 61, a left joint 62, and a right joint 63 through an intermediate-joint-rotation-axis portion 61a, a left-joint-rotation-axis portion 62a, and a right-joint-rotation-axis portion 63a.

The tie rod 60 and the intermediate joint 61 are rotatable relative to each other about the intermediate-joint-rotation-axis portion 61a disposed in a front portion of the intermediate joint 61. The tie rod 60 and the left joint 62 are rotatable relative to each other about the left-joint-rotation-shaft part 62a disposed in a front portion of the left joint 62. The tie rod 60 and the right joint 63 are rotatable relative to each other about the right-joint-rotation-shaft part 63a disposed in a front portion of the right joint 63.

The left joint 62 is connected to the left-front-wheel-supporting part 55 supporting the left front wheel 31. The left-front-wheel-supporting part 55 is supported by the left side member 53 to be rotatable about the left turning axis PL. The right joint 63 is connected to the right-front-wheel-supporting part 56 supporting the right front wheel 32. The right-front-wheel-supporting part 56 is supported by the right side member 54 to be rotatable about the right turning axis PR.

Although not specifically shown, a steering member that can be steered by the operator of the vehicle 1 is connected to the intermediate joint 61. The operator of the vehicle 1 controls the rotation directions of the left front wheel 31 and the right front wheel 32 by operating the steering member.

Specifically, when the operator of the vehicle 1 operates the unillustrated steering member, the intermediate joint 61 to which the steering member is connected rotates in the left direction or in the right direction about a rear portion thereof. In the following description, a case where the intermediate joint 61 rotates counterclockwise about the rear portion thereof by an operation of the steering member when the tie rod 60 is seen from above will be described.

As illustrated in FIG. 4, when the intermediate joint 61 rotates by an operation of the steering member, the tie rod 60 thereby moves leftward. This movement of the tie rod 60 causes the left joint 62 to rotate clockwise about the left-joint-rotation-axis portion 62a and the right joint 63 to rotate clockwise about the right-joint-rotation-axis portion 63a, when the tie rod 60 is seen from above. Accordingly, the left-front-wheel-supporting part 55 connected to the left joint 62 rotates clockwise about the left turning axis PL, and the right-front-wheel-supporting part 56 connected to the right joint 63 rotates clockwise about the right turning axis PR.

Thus, as indicated by the dot-dash lines in FIG. 4, the left front wheel 31 and the right front wheel 32 rotate rightward. Although not specifically described, when the tie rod 60 is seen from above, in a case where the intermediate joint rotates clockwise about a rear portion thereof by an operation of the steering member, the left front wheel 31 and the right front wheel 32 rotate leftward.

The term "parallel to the road surface" includes not only a state where the left-front-wheel-rotation axis P31 is completely parallel to the road surface but also a state where the left-front-wheel-rotation axis P31 tilts with respect to the road surface to such a degree that does not affect a leaning posture of the vehicle body 2 in the left direction or in the right direction. The same holds for description concerning rotation axes below.

As illustrated in FIG. 1, the pair of left and right rear wheels 4 includes a left rear wheel 41 and a right rear wheel 42. The left rear wheel 41 is supported by a rear portion of the vehicle body 2 to be rotatable about a left-rear-wheel-rotation axis P41 extending in parallel with the road surface. The right rear wheel 42 is supported by the rear portion of the vehicle body 2 to be rotatable about a right-rear-wheel-rotation axis P42 extending in parallel with the road surface. The left rear wheel 41 and the right rear wheel 42 are disposed side by side in the left-right direction. The pair of left and right rear wheels 4 is fixed to the vehicle body 2 such that the traveling direction is the front-rear direction.

As illustrated in FIGS. 1 and 2, a lower space V surrounded by the left front wheel 31, the right front wheel 32, the left rear wheel 41, and the right rear wheel 42 is formed under the vehicle body 2. The lower space V is a space that can accommodate baggage in a case where the vehicle 1 is a baby carriage, and is a space in which parts can be disposed in a case where the vehicle 1 is a vehicle other than the baby carriage.

The vehicle body 2 includes a body frame 21 supporting the pair of left and right rear wheels 4 and a linkage-mechanism-support part 22 supporting the linkage mechanism 5.

The body frame 21 supports the linkage-mechanism-support part 22 and the pair of left and right rear wheels 4. The body frame 21 is constituted by, for example, a pipe-shaped member. The body frame 21 may be constituted by a plate-shaped member.

The linkage-mechanism-support part 22 is located forward of the body frame 21. The linkage-mechanism-support part 22 is a member extending in the top-bottom direction. In this embodiment, the linkage-mechanism-support part 22 is constituted by, for example, a pipe-shaped member. The linkage-mechanism-support part 22 may be constituted by a plate-shaped member.

The linkage-mechanism-support part 22 is connected to a front end portion of the body frame 21. Accordingly, the linkage-mechanism-support part 22 is supported by the front end portion of the body frame 21. The linkage-mechanism-support part 22 may be connected to any portion of the body frame 21.

As will be described later, the linkage-mechanism-support part 22 supports an upper cross member 51 of the linkage mechanism 5 such that the upper cross member 51 is swingable about a first-center-swing axis UI, and supports a lower cross member 52 such that the lower cross member 52 is swingable about a second-center-swing axis DI.

The operation handle 6 is connected to the body frame 21. The operation handle 6 extends upward from the body frame 21 when the vehicle 1 is seen from the front. Although not specifically shown, an upper portion of the operation handle 6 includes a holder portion to be held by the operator.

The linkage mechanism 5 is supported by the linkage-mechanism-support part 22 located in a front portion of the vehicle body 2 such that the linkage mechanism 5 is swingable in the top-bottom direction when the vehicle 1 is seen from the front. The linkage mechanism 5 is a linkage mechanism of a parallel four-bar linkage (also called a parallelogram linkage) type linkage mechanism. The linkage mechanism 5 is located above the pair of left and right front wheels 3.

The linkage mechanism 5 includes the upper cross member 51 (first swing lever), the lower cross member 52 (second swing lever), the left side member 53 (left-front-wheel support), and the right side member 54 (right-front-wheel support).

The upper cross member 51 extends in the left-right direction. A center portion of the upper cross member 51 in the left-right direction is supported by the linkage-mechanism-support part 22 to be swingable about the first-center-swing axis UI. The first-center-swing axis UI extends in the front-rear direction.

The upper cross member 51 may be located forward of the linkage-mechanism-support part 22, or may be located rearward of the linkage-mechanism-support part 22. The upper cross member 51 may be located at both forward and rearward of the linkage-mechanism-support part 22.

The lower cross member 52 extends in the left-right direction. The lower cross member 52 is located below the upper cross member 51. A center portion of the lower cross member 52 in the left-right direction is supported by the linkage-mechanism-support part 22 to be swingable about the second-center-swing axis DI. The second-center-swing axis DI extends in the front-rear direction.

The lower cross member 52 may be located forward of the linkage-mechanism-support part 22, or may be located rearward of the linkage-mechanism-support part 22. The lower cross member 52 may be located at both forward and rearward of the linkage-mechanism-support part 22.

The left side member 53 is located at the left of the linkage-mechanism-support part 22. The left side member 53 extends in the direction in which the linkage-mechanism-support part 22 extends. That is, the left side member 53 is parallel to the linkage-mechanism-support part 22. In this embodiment, the left side member 53 extends in the top-bottom direction.

The term "parallel" includes not only a case where members are completely parallel to each other but also a case where members are tilted relative to each other to such a degree that does not affect an operation of the linkage mechanism 5.

The right side member 54 is located at the right of the linkage-mechanism-support part 22. The right side member 54 extends in the direction in which the linkage-mechanism-support part 22 extends. That is, the right side member 54 is parallel to the linkage-mechanism-support part 22. In this embodiment, the right side member 54 extends in the top-bottom direction.

With the configuration described above, the left side member 53, the linkage-mechanism-support part 22, and the right side member 54 are parallel.

The left end of the upper cross member 51 is connected to the left side member 53 to be swingable about a first-left-swing axis UL. The first-left-swing axis UL extends in the front-rear direction. The first-left-swing axis UL is parallel to the first-center-swing axis UI.

The left end of the lower cross member 52 is connected to the left side member 53 to be swingable about a second-left-swing axis DL. The second-left-swing axis DL extends in the front-rear direction. The second-left-swing axis DL is parallel to the second-center-swing axis DI.

The right end of the upper cross member 51 is connected to the right side member 54 to be swingable about a first-right-swing axis UR. The first-right-swing axis UR extends in the front-rear direction. The first-right-swing axis UR is parallel to the first-center-swing axis UI.

The right end of the lower cross member 52 is connected to the right side member 54 to be swingable about a second-right-swing axis DR. The second-right-swing axis DR extends in the front-rear direction. The second-right-swing axis DR is parallel to the second-center-swing axis DI.

The first-center-swing axis UI, the first-left-swing axis UL, the first-right-swing axis UR, the second-center-swing axis DI, the second-left-swing axis DL, and the second-right-swing axis DR extend in parallel with each other. The first-center-swing axis UI, the first-left-swing axis UL, the first-right-swing axis UR, the second-center-swing axis DI, the second-left-swing axis DL, and the second-right-swing axis DR are located above the left front wheel 31 and the right front wheel 32.

The upper cross member 51, the lower cross member 52, the left side member 53, and the right side member 54 are supported by the vehicle body 2 such that the upper cross member 51 and the lower cross member 52 are kept in parallel with each other, and the left side member 53 and the right side member 54 are kept in parallel with each other. That is, as described above, the upper cross member 51 and the lower cross member 52 are rotatably supported by the linkage-mechanism-support part 22. The left side member 53 and the right side member 54 move in the top-bottom direction relative to the vehicle body 2.

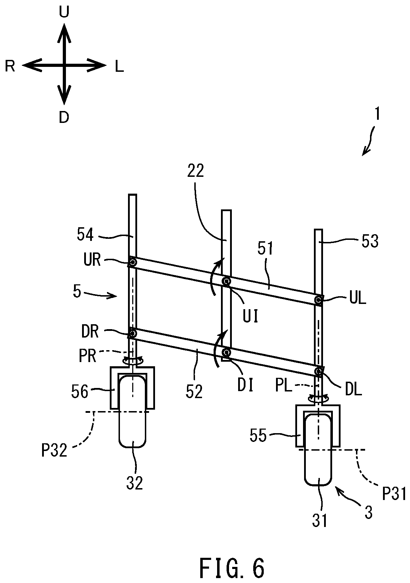

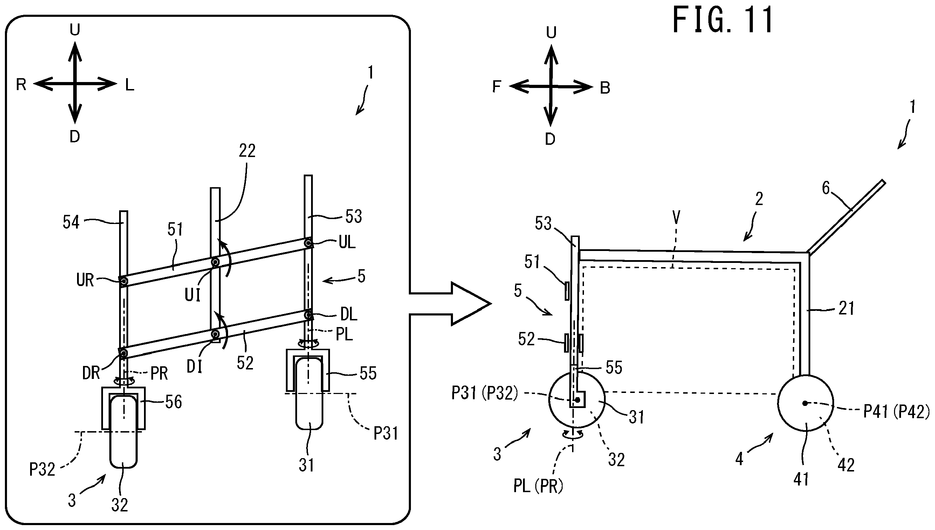

The shape of the linkage mechanism 5 changes by movement of the left front wheel 31 or the right front wheel 32 in the top-bottom direction. That is, the shape of the linkage mechanism 5 changes by operation of the linkage mechanism 5. As illustrated in FIG. 2, while the linkage mechanism 5 is not operated, the linkage mechanism 5 is rectangular when the vehicle 1 is seen from the front. On the other hand, as illustrated in FIGS. 5 and 6, while the linkage mechanism 5 is operated, the linkage mechanism 5 is a parallelogram when the vehicle 1 is seen from the front. That is, the shape of the linkage mechanism 5 when the vehicle 1 is seen from the front changes by operation of the linkage mechanism 5. FIG. 11 shows FIG. 1 and FIG. 5 side by side.

The deformation of the linkage mechanism 5 is caused when the upper cross member 51 and the lower cross member 52 rotate about the first-center-swing axis UI and the second-center-swing axis DI, respectively, relative to the linkage-mechanism-support part 22, and the upper cross member 51, the lower cross member 52, the left side member 53, and the right side member 54 rotate about the first-left-swing axis UL, the first-right-swing axis UR, the second-left-swing axis DL, and the second-right-swing axis DR, respectively, when the vehicle 1 is seen from the front.

For example, as illustrated in FIG. 5, in a case where the left front wheel 31 rides on an obstacle such as a step on the road surface in the traveling direction, the left side member 53 supporting the left front wheel 31 moves upward relative to the linkage-mechanism-support part 22. When the left side member 53 moves upward as described above, the upper cross member 51 rotates counterclockwise, when the vehicle 1 is seen from the front, about the first-center-swing axis UI relative to the linkage-mechanism-support part 22. At this time, the lower cross member 52 also rotates counterclockwise, when the vehicle 1 is seen from the front, about the second-center-swing axis DI relative to the linkage-mechanism-support part 22. FIG. 5 shows the rotation directions of the upper cross member 51 and the lower cross member 52 by solid arrows.

As described above, while the upper cross member 51 and the lower cross member 52 rotate, the upper cross member 51 and the lower cross member 52 are kept in parallel, and the left side member 53 and the right side member 54 are also kept in parallel. Accordingly, the shape of the linkage mechanism 5 changes from a rectangle to a parallelogram.

Similarly, for example, as illustrated in FIG. 6, in a case where the right front wheel 32 rides on an obstacle such as a step on the road surface in the traveling direction, the right side member 54 supporting the right front wheel 32 moves upward relative to the linkage-mechanism-support part 22. When the right side member 54 moves upward as described above, the upper cross member 51 rotates clockwise, when the vehicle 1 is seen from the front, about the first-center-swing axis UI relative to the linkage-mechanism-support part 22. At this time, the lower cross member 52 also rotates clockwise, when the vehicle 1 is seen from the front, about the second-center-swing axis DI relative to the linkage-mechanism-support part 22. FIG. 6 shows the rotation directions of the upper cross member 51 and the lower cross member 52 by solid arrows.

As described above, while the upper cross member 51 and the lower cross member 52 rotate, the upper cross member 51 and the lower cross member 52 are kept in parallel, and the left side member 53 and the right side member 54 are also kept in parallel. Accordingly, the shape of the linkage mechanism 5 changes from a rectangle to a parallelogram.

In operation of the linkage mechanism 5 as described above, the relative positions of the left front wheel 31 and the right front wheel 32 in the top-bottom direction change without leaning in the left direction or in the right direction. The left front wheel 31 and the right front wheel 32 are also kept in upright states relative to the vehicle body 2 in operation of the linkage mechanism 5.

The left rear wheel 41 and the right rear wheel 42 are also kept in upright states relative to the vehicle body 2 in operation of the linkage mechanism 5.

As described above, even in operation of the linkage mechanism 5, the left front wheel 31, the right front wheel 32, the left rear wheel 41, and the right rear wheel 42 are kept in upright positions relative to the vehicle body 2. Thus, the vehicle body 2 stands on its own while the vehicle 1 is stopped and does not lean while the vehicle 1 is turning, on a flat road surface. In the manner described above, the linkage mechanism 5 serves as a wheel-tilt-suppressing mechanism that is deformed not to cause the left front wheel 31 and the right front wheel 32 to lean in the left direction or in the right direction when the left front wheel 31 or the right front wheel 32 is displaced in the top-bottom direction relative to the vehicle body 2.

With this configuration of the vehicle 1 according to this embodiment as described above, in a case where while the vehicle 1 turns leftward or rightward, one of the left front wheel 31 or the right front wheel 32 rides on an obstacle in the traveling direction in a state where the left front wheel 31 rotates about the left turning axis PL and the right front wheel 32 rotates about the right turning axis PR, the vehicle body 2 of the vehicle 1 does not roll in the left direction or in the right direction.

FIG. 22(a) illustrates a schematic configuration of an example of the vehicle according to this embodiment. The top view of FIG. 22(a) schematically illustrates a state where the left and right front wheels 31 and 32 of the vehicle 1 rotate about the turning axes PL and PR, respectively. The second view from the top in FIG. 22(b) is a top view seen from above and showing a state where the right front wheel 32 of the vehicle 1 rides on an obstacle X in the traveling direction of the vehicle 1. The bottom view of FIG. 22(b) is a front view showing the left and right front wheels 31 and 32 of the vehicle 1 in the state of FIG. 22(a). Thus, in FIG. 22(a), character M denotes a barycenter of the vehicle 1.

As illustrated in FIG. 22(a), in the vehicle 1 according to this embodiment, in the case where while the vehicle 1 turns leftward or rightward, one of the left front wheel 31 or the right front wheel 32 rides on an obstacle X in the traveling direction in the state where the left front wheel 31 rotates about the left turning axis PL and the right front wheel 32 rotates about the right turning axis PR, the linkage mechanism 5 moves one of the wheels upward without leaning of one of the wheels in the left direction or in the right direction. Thus, even in this case where one of the left front wheel 31 or the right front wheel 32 rides on the obstacle X in the traveling direction, the left and right front wheels 31 and 32 are kept in upright states relative to the vehicle body 2, and the vehicle body 2 and the turning axes PL and PR do not lean.

In the vehicle 1 according to this embodiment, as described above, while the vehicle 1 turns leftward or rightward, the left front wheel 31 rotates about the left turning axis PL extending in the top-bottom direction and the right front wheel 32 rotates about the right turning axis PR extending in the top-bottom direction. Thus, as illustrated in FIGS. 22(a) and 22(c), a displacement amount of the left front wheel 31 and the right front wheel 32 in the front-rear direction is smaller than a displacement amount of the left front wheel 2031 and the right front wheel 2032 in the front-rear direction in the vehicle 2001 disclosed in Patent Document 3.

In addition, as described above, the left front wheel 31 and the right front wheel 32 are displaced in the top-bottom direction while being kept in the upright states by the linkage mechanism 5. Accordingly, even in the case where, while the vehicle 1 turns leftward or rightward, one of the left front wheel 31 or the right front wheel 32 rides on the obstacle X in the traveling direction in the state where the left front wheel 31 rotates about the left turning axis PL extending in the top-bottom direction and the right front wheel 32 rotates about the right turning axis PR extending in the top-bottom direction, the distance between the left front wheel 31 and the right front wheel 32 in the left-right direction is less likely to be smaller than the distance in the vehicles disclosed in Patent Documents 1 and 2.

Thus, the configuration of this embodiment can prevent restriction of the position and size of the lower space V located under the vehicle body 2 not to interfere with the left front wheel 31 and the right front wheel 32 while the vehicle 1 turns or in the case where one of the left front wheel 31 or the right front wheel 32 rides on the obstacle X in the traveling direction during turning of the vehicle 1. As a result, flexibility of the lower space V formed under the vehicle body 2 and between the four wheels 31, 32, 41, and 42 can be increased.

In the manner described above, it is possible to provide the vehicle 1 that can increase flexibility of the lower space V and can prevent rolls of the vehicle body 2 when one of the left front wheel 31 or the right front wheel 32 rides on the obstacle X in the traveling direction during turning of the vehicle 1.

### [Second Embodiment]

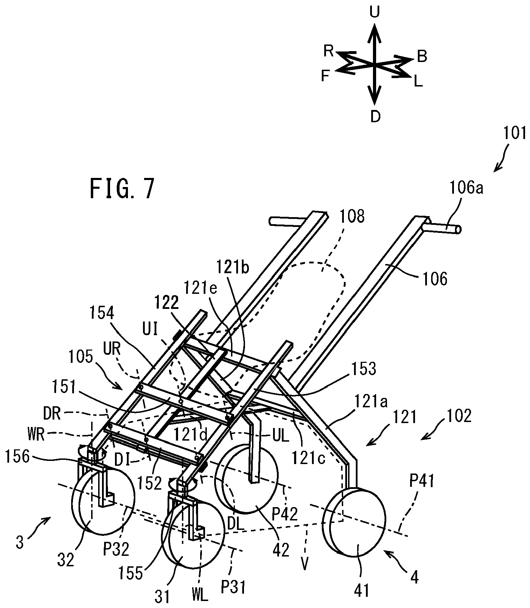

FIG. 7 is a perspective view illustrating a schematic configuration of a vehicle 101 according to a second embodiment. The vehicle 101 is different from the vehicle 1 of the first embodiment in that each of a left side member 153 and a right side member 154 of a linkage mechanism 105 extends in the top-bottom direction and in the front-rear direction such that an upper portion of each of the left side member 153 and the right side member 154 is located rearward of a lower portion of each of the left side member 153 and the right side member 154. In the following description, components similar to those of the first embodiment are denoted by the same reference characters and will not be described again, and components different from those of the first embodiment will be described.

The vehicle 101 includes a vehicle body 102, a pair of left and right front wheels 3, a pair of left and right rear wheels 4, the linkage mechanism 105, an operation handles 106, and a seat 108.

The seat 108 is supported by the vehicle body 102. The seat 108 is, for example, a bucket seat on which an infant or the like can be seated. The vehicle 101 is, for example, a baby carriage for carrying an infant or the like. The seat may be of other types other than a bucket type.

The vehicle body 102 includes a body frame 121 supporting the pair of left and right rear wheels 4, and a linkage-mechanism-support part 122 supporting the linkage mechanism 105. A lower space V is provided under the vehicle body 102 such that the lower space V is surrounded by the pair of left and right front wheels 3 and the pair of left and right rear wheels 4. The lower space V houses baggage and parts, for example.

The body frame 121 supports the linkage-mechanism-support part 122 and the pair of left and right rear wheels 4. The body frame 121 is constituted by, for example, a pipe-shaped member.

The body frame 121 includes a left main frame 121a, a right main frame 121b, a lower connecting frame 121c, and an upper connecting frame 121e.

The left main frame 121a is a member extending in the top-bottom direction when the vehicle 101 is seen from the front. A lower end portion of the left main frame 121a supports the left rear wheel 41 such that the left rear wheel 41 is rotatable about the left-rear-wheel-rotation axis P41. The right main frame 121b is a member extending in the top-bottom direction when the vehicle 101 is seen from the front. A lower end portion of the right main frame 121b supports the right rear wheel 42 such that the right rear wheel 42 is rotatable about the right-rear-wheel-rotation axis P42.

Operation handles 106 are individually connected to the left main frame 121a and the right main frame 121b. Each of the operation handles 106 extends upward and rearward to gradually elevate rearward from a corresponding one of the left main frame 121a or the right main frame 121b. In FIG. 7, character 106a denotes holder portions.

Each of the lower connecting frame 121c and the upper connecting frame 121e is a member extending in the left-right direction. Each of the lower connecting frame 121c and the upper connecting frame 121e connects the left main frame 121a and the right main frame 121b to each other in the left-right direction. The upper connecting frame 121e is located above the lower connecting frame 121c. The lower connecting frame 121c is connected to a lower portion of the linkage-mechanism-support part 122 by a reinforcing frame 121d. The upper connecting frame 121e supports an upper end portion of the linkage-mechanism-support part 122.

The linkage-mechanism-support part 122 is located forward of the body frame 121. The linkage-mechanism-support part 122 is a member extending in the top-bottom direction. The upper end portion of the linkage-mechanism-support part 122 is connected to a center portion of the upper connecting frame 121e in the left-right direction. In this embodiment, the linkage-mechanism-support part 122 is constituted by, for example, a pipe-shaped member. The linkage-mechanism-support part 122 may be constituted by a plate-shaped member.

As will be described later, the linkage-mechanism-support part 122 supports an upper cross member 51 of the linkage mechanism 5 such that the upper cross member 51 is swingable about a first-center-swing axis UI, and supports a lower cross member 52 such that the lower cross member 52 is swingable about a second-center-swing axis DI.

The linkage mechanism 105 (wheel-tilt-suppressing mechanism) includes the upper cross member 151 (first swing lever), the lower cross member 152 (second swing lever), the left side member 153 (left-front-wheel support), and the right side member 154 (right-front-wheel support). As in the first embodiment, the linkage mechanism 105 is a linkage mechanism of a parallel four-bar linkage (also called parallelogram linkage) type linkage mechanism. The linkage mechanism 105 is located above the pair of left and right front wheels 3.

The linkage mechanism 105 has the same configuration as that of the linkage mechanism 5 of the first embodiment except for arrangement. Thus, the configuration of the linkage mechanism 105 will not be described in detail.

The linkage-mechanism-support part 122 extends in the top-bottom direction and in the front-rear direction such that an upper portion of the linkage-mechanism-support part 122 is located rearward of a lower portion of the linkage-mechanism-support part 122. Each of the left side member 153 and the right side member 154 also extends in the top-bottom direction and in the front-rear direction such that an upper portion of each of the left side member 153 and the right side member 154 is located rearward of a lower portion of each of the left side member 153 and the right side member 154. That is, in a manner similar to the first embodiment, the left side member 153, the right side member 154, and the linkage-mechanism-support part 122 are also parallel in the second embodiment.

The upper cross member 151 extends in the left-right direction. A center portion of the upper cross member 151 in the left-right direction is supported by the linkage-mechanism-support part 122 to be swingable about the first-center-swing axis UI without a biasing member for returning to a neutral position. The first-center-swing axis UI extends in the front-rear direction and in the top-bottom direction to gradually elevate from the rear toward the front.

The lower cross member 152 extends in the left-right direction. A center portion of the lower cross member 152 in the left-right direction is supported by the linkage-mechanism-support part 122 to be swingable about the second-center-swing axis DI without a biasing member for returning to a neutral position. The second-center-swing axis DI extends in the front-rear direction and in the top-bottom direction to gradually elevate from the rear toward the front.

The left end of the upper cross member 151 is connected to the left side member 153 to be swingable about a first-left-swing axis UL. The first-center-swing axis UL extends in the front-rear direction and in the top-bottom direction to gradually elevate from the rear toward the front. The first-left-swing axis UL is parallel to the first-center-swing axis UI.

The left end of the lower cross member 152 is connected to the left side member 153 to be swingable to a second-left-swing axis DL. The second-left-swing axis DL extends in the front-rear direction and in the top-bottom direction to gradually elevate from the rear toward the front. The second-left-swing axis DL is parallel to the second-center-swing axis DI.

The right end of the upper cross member 151 is connected to the right side member 154 to be swingable about a first-right-swing axis UR. The first-right-swing axis UR extends in the front-rear direction and in the top-bottom direction to gradually elevate from the rear toward the front. The first-right-swing axis UR is parallel to the first-center-swing axis UI.

The right end of the lower cross member 152 is connected to the right side member 154 to be swingable about a second-right-swing axis DR. The second-right-swing axis DR extends in the front-rear direction and in the top-bottom direction to gradually elevate from the rear toward the front. The second-right-swing axis DR is parallel to the second-center-swing axis DI.

In a manner similar to the first embodiment, the first-center-swing axis UI, the first-left-swing axis UL, the first-right-swing axis UR, the second-center-swing axis DI, the second-left-swing axis DL, and the second-right-swing axis DR extend in parallel with each other. The first-center-swing axis UI, the first-left-swing axis UL, the first-right-swing axis UR, the second-center-swing axis DI, the second-left-swing axis DL, and the second-right-swing axis DR are located above the left front wheel 31 and the right front wheel 32.

In a manner similar to the first embodiment, the upper cross member 151, the lower cross member 152, the left side member 153, and the right side member 154 are supported by the vehicle body 102 such that the upper cross member 151 and the lower cross member 152 are kept in parallel with each other, and the left side member 153 and the right side member 154 are kept in parallel with each other. That is, as described above, the upper cross member 151 and the lower cross member 152 are rotatably supported by the linkage-mechanism-support part 122. The left side member 153 and the right side member 154 move in the top-bottom direction relative to the vehicle body 102, when the vehicle 101 is seen from the front.

The shape and operation of the linkage mechanism 105 are similar to the shape and operation of the linkage mechanism 5 of the first embodiment. Thus, the shape and operation of the linkage mechanism 105 will not be described in detail.

The left front wheel 31 is supported by the left-front-wheel-supporting part 155 connected to a lower end portion of the left side member 153 of the linkage mechanism 105 such that the left front wheel 31 is rotatable about the left-front-wheel-rotation axis P31 extending in parallel with a road surface. The right front wheel 32 is supported by the right-front-wheel-supporting part 156 connected to a lower end portion of the right side member 154 of the linkage mechanism 105such that the right front wheel 32 is rotatable about the right-front-wheel-rotation axis P32 extending in parallel with a road surface.

The left-front-wheel-supporting part 155 is supported by the left side member 153 to be rotatable about a left turning axis WL extending in the top-bottom direction. Accordingly, the left front wheel 31 is rotatable about the left turning axis WL. That is, the left front wheel 31 is a caster wheel. A rotation angle range of the left front wheel 31 may be 360 degrees or may be a range smaller than 360 degrees. The left-front-wheel-supporting part 155 has a U shape sandwiching the left front wheel 31 in the axial direction of the left-front-wheel-rotation axis P31. A rod-shaped left-front-wheel-supporting part may be disposed between a pair of left front wheels 31. Alternatively, one left front wheel 31 may be supported by a rod-shaped left-front-wheel-supporting part to be rotatable about the left-front-wheel-rotation axis P31.

The right-front-wheel-supporting part 156 is supported by the right side member 154 to be rotatable about a right turning axis WR extending in the top-bottom direction. Accordingly, the right front wheel 32 is rotatable about the right turning axis WR. That is, the right front wheel 32 is a caster wheel. A rotation angle range of the right front wheel 32 may be 360 degrees or may be a range smaller than 360 degrees. The right-front-wheel-supporting part 156 has a U shape sandwiching the right front wheel 32 in the axial direction of the right-front-wheel-rotation axis P32. A rod-shaped right-front-wheel-supporting part may be disposed between a pair of right front wheels 32. Alternatively, one of the right front wheel 32 may be supported by a rod-shaped right-front-wheel-supporting part to be rotatable about the right-front-wheel-rotation axis P32.

The left-front-wheel-supporting part 155 and the right-front-wheel-supporting part 156 may be connected to each other. That is, the left-front-wheel-supporting part 155 and the right-front-wheel-supporting part 156 may rotate as one unit. The left-front-wheel-supporting part 155 and the right-front-wheel-supporting part 156 may be coupled to each other by a tie rod having a configuration similar to that of the first embodiment.

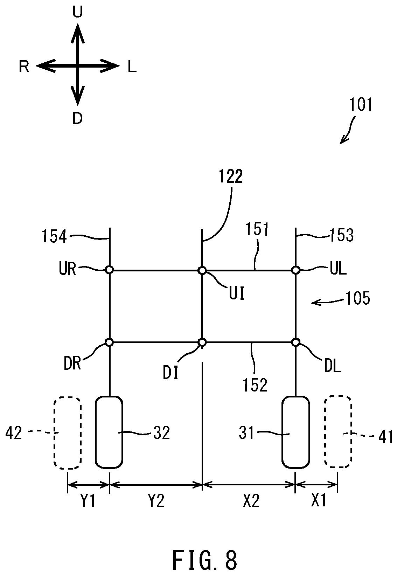

As illustrated in FIG. 8, in this embodiment, the left front wheel 31 is located closer to the left rear wheel 41 than the first-center-swing axis UI and the second-center-swing axis DI of the linkage mechanism 105, when the vehicle 101 is seen from the front. That is, when the vehicle 101 is seen from the front, a distance X1 in the left-right direction between the center of the left front wheel 31 in the left-right direction and the center of the left rear wheel 41 in the left-right direction is smaller than a distance X2 in the left-right direction between the center of the left front wheel 31 in the left-right direction and the first-center-swing axis UI and the second-center-swing axis DI.

In this embodiment, when the vehicle 101 is seen from the front, the distance X2 in the left-right direction between the center of the left front wheel 31 in the left-right direction and the first-center-swing axis UI and the second-center-swing axis DI is smaller than a distance X1 + X2 in the left-right direction between the center of the left rear wheel 41 in the left-right direction and the first-center-swing axis UI and the second-center-swing axis DI.

When the vehicle 101 is seen from the front, the distance X1 in the left-right direction between the center of the left front wheel 31 in the left-right direction and the center of the left rear wheel 41 in the left-right direction may be equal to the distance X2 in the left-right direction between the center of the left front wheel 31 in the left-right direction and the first-center-swing axis UI and the second-center-swing axis DI.

Similarly, when the vehicle 101 is seen from the front, the right front wheel 32 is located closer to the right rear wheel 42 than the first-center-swing axis UI and the second-center-swing axis DI. That is, when the vehicle 101 is seen from the front, a distance Y1 in the left-right direction between the center of the right front wheel 32 in the left-right direction and the center of the right rear wheel 42 in the left-right direction is smaller than a distance Y2 in the left-right direction between the center of the right front wheel 32 in the left-right direction and the first-center-swing axis UI and the second-center-swing axis DI.

In this embodiment, when the vehicle 101 is seen from the front, the distance Y2 in the left-right direction between the center of the right front wheel 32 in the left-right direction and the first-center-swing axis UI and the second-center-swing axis DI is smaller than a distance Y1 + Y2 in the left-right direction between the center of the right rear wheel 42 in the left-right direction and the first-center-swing axis UI and the second-center-swing axis DI.

When the vehicle 101 is seen from the front, the distance Y1 in the left-right direction between the center of the right front wheel 32 in the left-right direction and the center of the right rear wheel 42 in the left-right direction may be equal to the distance Y2 in the left-right direction between the center of the right front wheel 32 in the left-right direction and the first-center-swing axis UI and the second-center-swing axis DI.

That is, the linkage mechanism 105 is configured such that in the left-right direction of the vehicle 101, the left front wheel 31 is located closer to the left rear wheel 41 than the first-center-swing axis UI and the second-center-swing axis DI, and the right front wheel 32 is located closer to the right rear wheel 42 than the first-center-swing axis UI and the second-center-swing axis DI, when the vehicle 101 is seen from the front. Thus, when the vehicle 101 is seen from the front, in the left-right direction of the vehicle 101, the left front wheel 31 can be disposed closer to the left rear wheel 41, and the right front wheel 32 can be disposed closer to the right rear wheel 42.

When the left front wheel 31 or the right front wheel 32 of the vehicle 101 rides on a step or the like, an operation of the linkage mechanism 105 causes the distance between the left front wheel 31 and the right front wheel 32 in the left-right direction to change. On the other hand, the left front wheel 31 and the right front wheel 32 are disposed as described above so that it is possible to suppress a change of the distance between the left front wheel 31 and the right front wheel 32 in the left-right direction caused by an operation of the linkage mechanism 105 when the left front wheel 31 or the right front wheel 32 rides on a step or the like, as compared to a case where the left front wheel 31 is close to the first-center-swing axis UI and the second-center-swing axis DI and a case where the right front wheel 32 is close to the first-center-swing axis UI and the second-center-swing axis DI.

With the configuration of this embodiment as described above, a vehicle resistant to rolls in the left-right direction can be obtained, as compared to a case where the left front wheel 31 is close to the first-center-swing axis UI and the second-center-swing axis DI and a case where the right front wheel 32 is close to the first-center-swing axis UI and the second-center-swing axis DI, when the vehicle 101 is seen from the front.

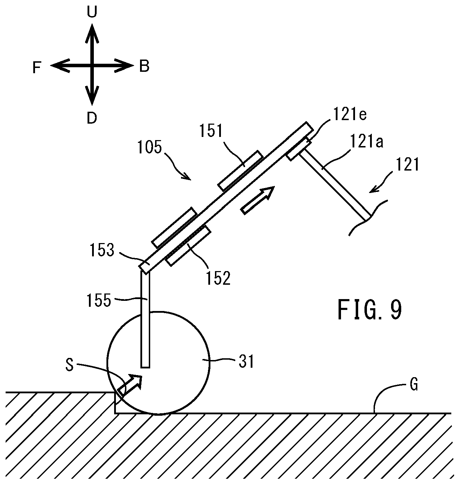

In this embodiment, as described above, the first-center-swing axis UI and the second-center-swing axis DI extend in the front-rear direction and in the top-bottom direction to gradually elevate from the rear toward the front. Thus, as illustrated in FIG. 9, it is possible to change a force exerted on the left front wheel 31 when the left front wheel 31 comes into contact with a step S (obstacle) of a road surface G not to a force in the left-right direction but to an upward and rearward force (as indicated by the white arrow in FIG. 9).

Accordingly, a force input from the road surface to the left front wheel 31 or the right front wheel 32 is not easily converted to a force in the left-right direction but is converted to an upward and rearward force. Thus, it is possible to prevent a force of causing the left front wheel 31 and the right front wheel 32 to lean in the left direction or in the right direction from being exerted on the vehicle body 102.

In addition, with the configuration of the vehicle 101 according to this embodiment as described above, in a case where while the vehicle 101 turns leftward or rightward, one of the left front wheel 31 or the right front wheel 32 rides on an obstacle in the traveling direction in a state where the left front wheel 31 rotates about the left turning axis PL and the right front wheel 32 rotates about the right turning axis PR, the vehicle body 102 of the vehicle 101 does not roll in the left direction or in the right direction.

In a manner similar to the vehicle 1 of the first embodiment, in the vehicle 101 according to this embodiment, while the vehicle 101 turns leftward or rightward as described above, the left front wheel 31 rotates about the left turning axis PL extending in the top-bottom direction and the right front wheel 32 rotates about the right turning axis PR extending in the top-bottom direction. Accordingly, a displacement amount of the left front wheel 31 and the right front wheel 32 in the front-rear direction is smaller than a displacement amount in the front-rear direction in the vehicle disclosed in Patent Document 3.

As described above, the left front wheel 31 and the right front wheel 32 are displaced in the top-bottom direction while being kept in upright states by the linkage mechanism 105. Accordingly, even in the case where, while the vehicle 101 turns leftward or rightward, one of the left front wheel 31 or the right front wheel 32 rides on the obstacle in the traveling direction in the state where the left front wheel 31 rotates about the left turning axis PL extending in the top-bottom direction and the right front wheel 32 rotates about the right turning axis PR extending in the top-bottom direction, the distance between the left front wheel 31 and the right front wheel 32 in the left-right direction is less likely to be smaller than the distance in the vehicles disclosed in Patent Documents 1 and 2.

As described above, the configuration of this embodiment can prevent restriction of the position and size of the lower space V located under the vehicle body 102 not to interfere with the left front wheel 31 and the right front wheel 32 while the vehicle 101 turns or in the case where one of the left front wheel 31 or the right front wheel 32 rides on the obstacle in the traveling direction during turning of the vehicle 101. As a result, flexibility of the lower space V formed under the vehicle body 102 and between the four wheels 31, 32, 41, and 42 can be increased.

In this manner, the second embodiment can obtain advantages similar to those of the first embodiment. That is, it is possible to provide the vehicle 101 that can increase flexibility of the lower space V and can prevent rolls of the vehicle body 102 when one of the left front wheel 31 or the right front wheel 32 rides on the obstacle in the traveling direction during turning of the vehicle 101.

In addition, the direction of a force input from the road surface to the left front wheel 31 or the right front wheel 32 is the same as the direction in which the left side member 153, the right side member 154, and the linkage-mechanism-support part 122 extend. Thus, it is possible to suppress deformation of the left side member 153, the right side member 154, and the linkage-mechanism-support part 122. Accordingly, the left front wheel 31 or the right front wheel 32 can easily go over a step S on a road surface G.

The configuration of this embodiment as described above can further reduce a force exerted on the vehicle body 102 while maintaining contact between an uneven road surface and the wheels.

In this embodiment, the upper cross member 151 is supported by the vehicle body 102 to be swingable about the first-center-swing axis UI without a biasing member for returning to the neutral position. The lower cross member 152 is supported by the vehicle body 102 to be swingable about the second-center-swing axis DI without a biasing member for returning to the neutral position.

The biasing member may be a member that generates an elastic restoring force, such as a coil spring, a leaf spring, or rubber, or a constituent that applies a driving force, such as an actuator.

Accordingly, there occurs no operation of returning the upper cross member 151 and the lower cross member 152 to the neutral position by the biasing member, and thus, it is possible to reduce swings of the vehicle 101 due to swings of the upper cross member 151 and the lower cross member 152. That is, it is possible to enhance followability of the left front wheel 31 and the right front wheel 32 to an uneven road surface.

The configuration described above allows the upper cross member 151 and the lower cross member 152 to operate smoothly. Accordingly, it is possible to suppress transfer of a force exerted on the left front wheel 31 and the right front wheel 32 from the road surface to the vehicle body 102.

Thus, the configuration described above can further reduce a force exerted on the vehicle body 102 while maintaining contact between an uneven road surface and the wheels. In addition, since a biasing member is unnecessary, the number of parts of the linkage mechanism 105 can be reduced.

### [Third Embodiment]

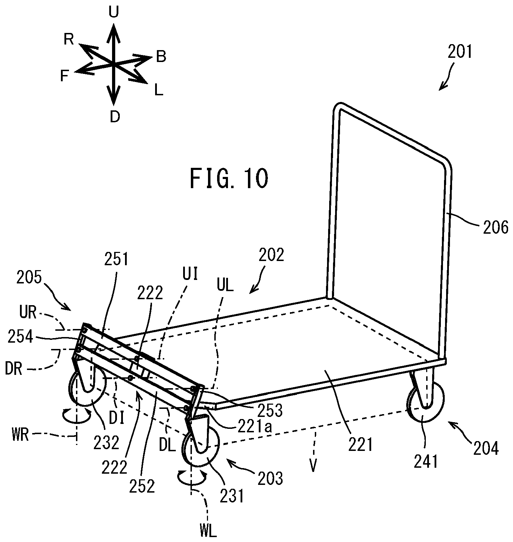

FIG. 10 is a view illustrating a schematic configuration of a vehicle 201 according to a third embodiment. The vehicle 201 is different from the vehicle 101 of the second embodiment in that a pair of left and right front wheels 203 is provided with a linkage mechanism 205 interposed therebetween in a front portion of a carriage 221. In the following description, components similar to those of the first and second embodiments are denoted by the same reference characters and will not be described again, and components different from those of the first and second embodiments will be described.

As illustrated in FIG. 10, the vehicle 201 includes a vehicle body 202, the pair of left and right front wheels 203, a pair of left and right rear wheels 204, the linkage mechanism 205, and an operation handle 206. The vehicle 201 is a dolly capable of conveying baggage or the like placed on the carriage 221 of the vehicle body 202 described later.

The vehicle body 202 includes the carriage 221 on which baggage or the like can be placed, and a linkage-mechanism-support part 222 supporting the linkage mechanism 205. A lower space V is formed under the vehicle body 202 and surrounded by the pair of left and right front wheels 203 and the pair of left and right rear wheels 204. The lower space V houses parts, for example.

The carriage 221 is a plate-shaped member having a rectangular shape in plan view. The pair of left and right rear wheels 204 is disposed under a rear portion of the carriage 221. The pair of left and right rear wheels 204 includes a left rear wheel 241 and a right rear wheel 242. The left rear wheel 241 is disposed at the left under the rear portion of the carriage 221. The right rear wheel 242 is disposed at the right under the rear portion of the carriage 221. The carriage 221 constitutes a body frame of the vehicle body 202.

The operation handle 206 is connected to an upper portion of the rear portion of the carriage 221 to extend upward. The operation handle 206 has a U shape when the vehicle 201 is seen from the front. The operation handle 206 is connected to the upper portion of the rear portion of the carriage 221 such that a bent portion of the operation handle 206 is located at the top.

The linkage-mechanism-support part 222 supporting the pair of left and right front wheels 203 is provided on a front portion of the carriage 221. Notches 221a are provided in the left and right ends of a front portion of the carriage 221 to prevent interference of the front portion with the pair of left and right front wheels 203 supported by the linkage-mechanism-support part 222 when the left and right front wheels 203 move upward or downward as described later.

The linkage-mechanism-support part 222 extends upward from the top of a front portion of the carriage 221 when the vehicle 201 is seen from the front. Specifically, the linkage-mechanism-support part 222 extends upward and rearward from a front portion of the carriage 221 such that an upper portion of the linkage-mechanism-support part 222 is located rearward of a lower portion the linkage-mechanism-support part 222.

The linkage-mechanism-support part 222 is fixed to a center of the carriage 221 in the left-right direction. The linkage-mechanism-support part 222 supports an upper cross member 251 of the linkage mechanism 205 described later such that the upper cross member 251 is swingable about a first-center-swing axis UI, and supports a lower cross member 252 described later such that the lower cross member 252 is swingable about a second-center-swing axis DI.

The linkage mechanism 205 (wheel-tilt-suppressing mechanism) includes the upper cross member 251 (first swing lever), the lower cross member 252 (second swing lever), a left side member 253 (left-front-wheel support), and a right side member 254 (right-front-wheel support). As in the first and second embodiments, the linkage mechanism 205 is a linkage mechanism of a parallel four-bar linkage (also called parallelogram linkage) type linkage mechanism. The linkage mechanism 205 is located above the pair of left and right front wheels 203.

The linkage mechanism 205 has the same configuration as that of the linkage mechanism 5 of the first embodiment except for arrangement. Thus, the configuration of the linkage mechanism 205 will not be described in detail.

Each of the left side member 253 and the right side member 254 also extends in the top-bottom direction and in the front-rear direction such that an upper portion of each of the left side member 253 and the right side member 254 is located rearward of a lower portion of each of the left side member 253 and the right side member 254. Thus, in a manner similar to the first and second embodiments, the left side member 253, the right side member 254, and the linkage-mechanism-support part 222 are parallel in the third embodiment.

The upper cross member 251 extends in the left-right direction. A center portion of the upper cross member 251 in the left-right direction is supported by the linkage-mechanism-support part 222 to be swingable about the first-center-swing axis UI without a biasing member for returning to a neutral position. The first-center-swing axis UI extends in the front-rear direction and in the top-bottom direction to gradually elevate from the rear toward the front.

The lower cross member 252 extends in the left-right direction. A center portion of the lower cross member 252 in the left-right direction is supported by the linkage-mechanism-support part 222 to be swingable about the second-center-swing axis DI without a biasing member for returning to a neutral position. The second-center-swing axis DI extends in the front-rear direction and in the top-bottom direction to gradually elevate from the rear toward the front.

The left end of the upper cross member 251 is connected to the left side member 253 to be swingable about a first-left-swing axis UL. The first-center-swing axis UL extends in the front-rear direction and in the top-bottom direction to gradually elevate from the rear toward the front. The first-left-swing axis UL is parallel to the first-center-swing axis UI.

The left end of the lower cross member 252 is connected to the left side member 253 to be swingable to a second-left-swing axis DL. The second-left-swing axis DL extends in the front-rear direction and in the top-bottom direction to gradually elevate from the rear toward the front. The second-left-swing axis DL is parallel to the second-center-swing axis DI.

The right end of the upper cross member 251 is connected to the right side member 254 to be swingable about a first-right-swing axis UR. The first-right-swing axis UR extends in the front-rear direction and in the top-bottom direction to gradually elevate from the rear toward the front. The first-right-swing axis UR is parallel to the first-center-swing axis UI.

The right end of the lower cross member 252 is connected to the right side member 254 to be swingable about a second-right-swing axis DR. The second-right-swing axis DR extends in the front-rear direction and in the top-bottom direction to gradually elevate from the rear toward the front. The second-right-swing axis DR is parallel to the second-center-swing axis DI.

In a manner similar to the first embodiment, the first-center-swing axis UI, the first-left-swing axis UL, the first-right-swing axis UR, the second-center-swing axis DI, the second-left-swing axis DL, and the second-right-swing axis DR extend in parallel. The first-center-swing axis UI, the first-left-swing axis UL, the first-right-swing axis UR, the second-center-swing axis DI, the second-left-swing axis DL, and the second-right-swing axis DR are located above the left front wheel 231 and the right front wheel 232.

In a manner similar to the first embodiment, the upper cross member 251, the lower cross member 252, the left side member 253, and the right side member 254 are supported by the vehicle body 202 such that the upper cross member 251 and the lower cross member 252 are kept in parallel with each other, and the left side member 253 and the right side member 254 are kept in parallel with each other. That is, as described above, the upper cross member 251 and the lower cross member 252 are rotatably supported by the linkage-mechanism-support part 222. The left side member 253 and the right side member 254 move in the top-bottom direction relative to the vehicle body 202, when the vehicle 201 is seen from the front.

The shape and operation of the linkage mechanism 205 are similar to the shape and operation of the linkage mechanism 5 of the first embodiment and the linkage mechanism 105 of the second embodiment. Thus, the shape and operation of the linkage mechanism 205 will not be described in detail.

The pair of left and right front wheels 203 includes a left front wheel 231 and a right front wheel 232. The left front wheel 231 is supported by the left side member 253 of the linkage mechanism 205 to be rotatable about a left turning axis WL extending in the top-bottom direction. The left front wheel 231 is a caster wheel. The right front wheel 232 is supported by the right side member 254 of the linkage mechanism 205 to be rotatable about a right turning axis WR extending in the top-bottom direction. The right front wheel 232 is a caster wheel. Since the configurations of the left front wheel 231 and the right front wheel 232 are similar to those of the left front wheel 31 and the right front wheel 32 of the first embodiment, the configurations of the left front wheel 231 and the right front wheel 232 will not be described in detail. The left front wheel 231 and the right front wheel 232 are coupled to each other by a tie rod.

As described above, in this embodiment, the vehicle 201 having a dolly configuration is also configured such that the linkage mechanism 205 supports the pair of left and right front wheels 203. Thus, in a manner similar to the first and second embodiments, the pair of left and right front wheels 203 can be kept in upright states. In this embodiment, the pair of left and right rear wheels 204 is also kept in upright states by the vehicle body 202.

Accordingly, even in a case where the vehicle 201 travels on an uneven road surface, it is possible to reduce application of a force in the left direction or in the right direction to the left front wheel 231, the right front wheel 232, the left rear wheel 241, and the right rear wheel 242 while maintaining contact between the left front wheel 231, the right front wheel 232, the left rear wheel 241, and the right rear wheel 242 with a road surface. Thus, a force applied to the vehicle body 202 can be reduced.

Consequently, the configuration described above can further reduce a force exerted on the vehicle body 202 while maintaining contact between an uneven road surface and the wheels.

In addition, as in the second embodiment, since the first-center-swing axis UI and the second-center-swing axis DI extend in the front-rear direction and in the top-bottom direction to gradually elevate from the rear toward the front, a force exerted on the left front wheel 231 and the right front wheel 232 from the road surface can be changed to an upward and rearward force.

Accordingly, a force input from the road surface to the left front wheel 231 or the right front wheel 232 is not easily converted to a force in the left-right direction and is converted to an upward and rearward force. Thus, it is possible to ensure prevention of a force of causing the left front wheel 231 and the right front wheel 232 to lean in the left direction or in the right direction from being exerted on the vehicle body 202.

In addition, with the configuration of the vehicle 201 according to this embodiment as described above, in a case where while the vehicle 201 turns leftward or rightward, one of the left front wheel 231 or the right front wheel 232 rides on an obstacle in the traveling direction in a state where the left front wheel 231 rotates about the left turning axis WL and the right front wheel 232 rotates about the right turning axis WR, the vehicle body 202 of the vehicle 201 does not roll in the left direction or in the right direction.

In a manner similar to the vehicle 1 of the first embodiment, in the vehicle 201 according to the third embodiment, while the vehicle 201 turns leftward or rightward, the left front wheel 231 rotates about the left turning axis WL extending in the top-bottom direction and the right front wheel 232 rotates about the right turning axis WR extending in the top-bottom direction. Accordingly, a displacement amount of the left front wheel 231 and the right front wheel 232 in the front-rear direction is smaller than a displacement amount in the front-rear direction in the vehicle disclosed in Patent Document 3.

As described above, the left front wheel 231 and the right front wheel 232 are displaced in the top-bottom direction while being kept in upright states by the linkage mechanism 205. Accordingly, even in the case where while the vehicle 201 turns leftward or rightward, one of the left front wheel 231 or the right front wheel 232 rides on the obstacle in the traveling direction in the state where the left front wheel 231 rotates about the left turning axis WL extending in the top-bottom direction and the right front wheel 232 rotates about the right turning axis WR extending in the top-bottom direction, the distance between the left front wheel 231 and the right front wheel 232 in the left-right direction is less likely to be smaller than the distance in the vehicles disclosed in Patent Documents 1 and 2.

As described above, the configuration of this embodiment can prevent restriction of the position and size of the lower space V located under the vehicle body 202 not to interfere with the left front wheel 231 and the right front wheel 232 while the vehicle 201 turns or in the case where one of the left front wheel 231 or the right front wheel 232 rides on the obstacle in the traveling direction during turning of the vehicle 201. As a result, flexibility of the lower space V formed under the vehicle body 202 and between the four wheels 231, 232, 241, and 242 can be increased.

In the manner described above, it is possible to provide the vehicle 201 that can increase flexibility of the lower space V and can prevent rolls of the vehicle body 202 when one of the left front wheel 231 or the right front wheel 232 rides on the obstacle in the traveling direction during turning of the vehicle 201.

### [Fourth Embodiment]

### (Overall Configuration)

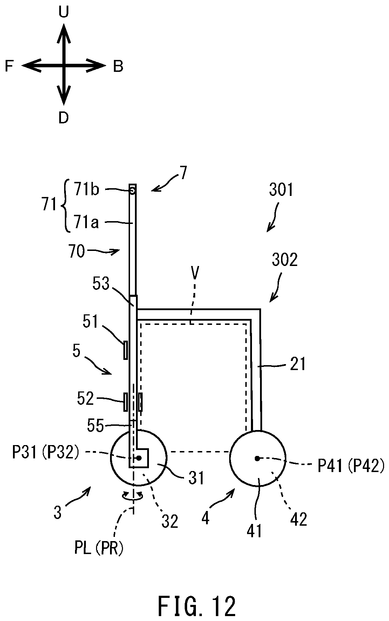

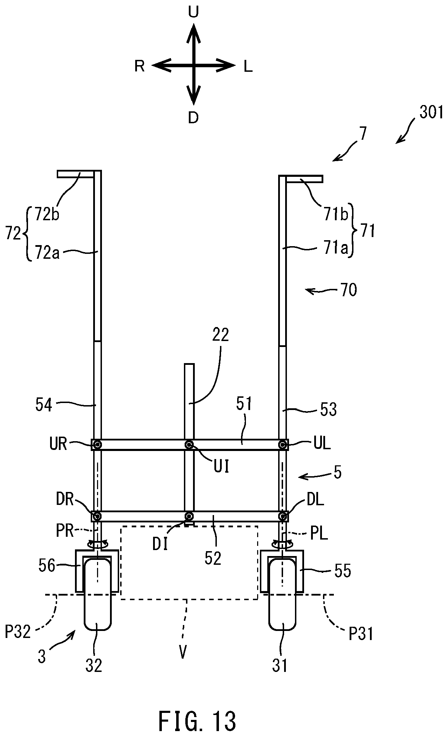

FIG. 12 is a view schematically illustrating a configuration of a vehicle 301 according to a fourth embodiment. FIG. 13 is a view schematically illustrating a configuration of a vehicle front portion when the vehicle 301 is seen from the front. In the following description, components similar to those of the vehicle 1 of the first embodiment are denoted by the same reference characters and will not be described again, and only components different from those of the vehicle 1 of the first embodiment will be described.

The vehicle 301 includes a vehicle body 302, a pair of left and right front wheels 3, a pair of left and right rear wheels 4, a linkage mechanism 5 (front-wheel-displacement-linkage mechanism), and a front-wheel-adjusting mechanism 7. Configurations of the pair of left and right front wheels 3 and the pair of left and right rear wheels 4 are similar to those in the first embodiment, and thus, will not be described in detail. The front-wheel-adjusting mechanism 7 includes a pair of operation handles 70. The pair of operation handles 70 is connected to the vehicle body 302. Components of the vehicle 301 will be described in detail later.

When an operator applies a forward force to the vehicle body 302 with the pair of operation handles 70, the vehicle 301 thereby moves forward. When the operator applies a forward force to the vehicle body 302 with the pair of operation handles 70, the vehicle 301 thereby moves rearward. When the operator applies a leftward turning force to the vehicle body 302 with the pair of operation handles 70, the vehicle 301 thereby turns leftward. When the operator applies a rightward turning force to the vehicle body 302 with the pair of operation handles 70, the vehicle 301 thereby turns rightward

That is, the vehicle 301 does not include a driving source. The vehicle 301 does not include a steering mechanism for steering at least one of the pair of left and right front wheels 3 or the pair of left and right rear wheels 4 with the pair of operation handles 70.

The pair of left and right front wheels 3 includes a left front wheel 31 and a right front wheel 32. The left front wheel 31 is rotatably supported at the left side member 53 of the linkage mechanism 5 to be rotatable about a left turning axis PL with the left-front-wheel-supporting part 55 interposed therebetween. The right front wheel 32 is rotatably supported at the right side member 54 of the linkage mechanism 5 to be rotatable about a right turning axis PR with the right-front-wheel-supporting part 56 interposed therebetween. The pair of left and right rear wheels 4 includes a left rear wheel 41 and a right rear wheel 42. The configurations of these wheels 31, 32, 41, and 42 are similar to those of the first embodiment, and will not be described in detail.

The vehicle body 302 includes a body frame 21 supporting the pair of left and right rear wheels 4, and a linkage-mechanism-support part 22 supporting the linkage mechanism 5. The configurations of the body frame 21 and the linkage-mechanism-support part 22 are similar to those of the first embodiment, and thus, will not be described in detail. A lower space V is formed under the vehicle body 302 and surrounded by the pair of left and right front wheels 3 and the pair of left and right rear wheels 4. The lower space V houses baggage and parts, for example.

The pair of operation handles 70 is connected to the linkage mechanism 5. The pair of operation handles 70 extends upward from the linkage mechanism 5, when the vehicle 301 is seen from the front. The pair of operation handles 70 includes a left operation handle 71 and a right operation handle 72.

The left operation handle 71 includes a left-operation-handle bar 71a and a left holder portion 71b. In this embodiment, the left-operation-handle bar 71a and the left holder portion 71b are integrally formed.

The left-operation-handle bar 71a extends from an upper end portion of the left side member 53 in the linkage mechanism 5 in the same direction as a direction in which the left side member 53 extends (extension direction) so as to be continuous to the left side member 53. That is, the left-operation-handle bar 71a extends upward from the upper end portion of the left side member 53. A lower end portion of the left-operation-handle bar 71a is connected to the upper end portion of the left side member 53. The left-operation-handle bar may extend in a direction different from the direction in which the left side member extends, from the upper end portion of the left side member. The left-operation-handle bar and the left side member may be a united member.

The left holder portion 71b extends from an upper portion of the left-operation-handle bar 71a in a direction intersecting with the extension direction of the left-operation-handle bar 71a. The left holder portion 71b is held by the left hand of an operator.

The right operation handle 72 includes a right-operation-handle bar 72a and a right holder portion 72b. In this embodiment, the right-operation-handle bar 72a and the right holder portion 72b as integrally formed.

The right-operation-handle bar 72a extends from an upper end portion of the right side member 54 in the linkage mechanism 5 in the same direction as a direction in which the right side member 54 extends (extension direction) so as to be continuous to the right side member 54. That is, the right-operation-handle bar 72a extends upward from the upper end portion of the right side member 54. A lower end portion of the right-operation-handle bar 72a is connected to the upper end portion of the right side member 54. The right-operation-handle bar may extend in a direction different from a direction in which the right side member extends, from the upper end portion of the right side member. The right-operation-handle bar and the right side member may be a united member.

The right holder portion 72b extends from an upper portion of the right-operation-handle bar 72a in a direction intersecting with the extension direction of the right-operation-handle bar 72a. The right holder portion 72b is held by the right hand of an operator.

The linkage mechanism 5 is supported by the linkage-mechanism-support part 22 located in a front portion of the vehicle body 302 and is swingable in the top-bottom direction when the vehicle 301 is seen from the front. The linkage mechanism 5 is a linkage mechanism of a parallel four-bar linkage (also called a parallelogram linkage) type linkage mechanism. The linkage mechanism 5 is located above the pair of left and right front wheels 3. The configuration of the linkage mechanism 5 is similar to the configuration of the first embodiment, and thus, the linkage mechanism 5 will not be described in detail.

The left-operation-handle bar 71a connected to the upper end portion of the left side member 53 of the linkage mechanism 5 moves only upward and downward. Thus, the left-operation-handle bar 71a moves linearly relative to the vehicle body 302. That is, the left operation handle 71 is provided to be displaced linearly relative to the vehicle body 302.

Similarly, the right-operation-handle bar 72a connected to the upper end portion of the right side member 54 of the linkage mechanism 5 moves only upward and downward. Thus, the right-operation-handle bar 72a moves linearly relative to the vehicle body 302. That is, the right operation handle 72 is provided to be displaced linearly relative to the vehicle body 302.

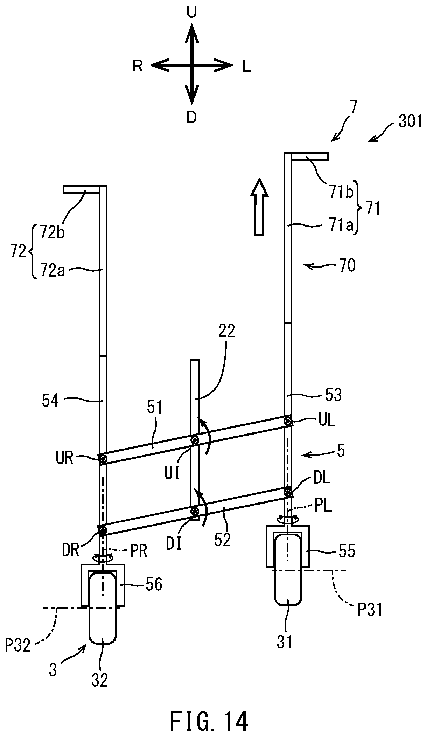

For example, as illustrated in FIG. 14, in a case where the left front wheel 31 is located above the right front wheel 32, the left side member 53 supporting the left front wheel 31 moves upward relative to the linkage-mechanism-support part 22. When the left side member 53 moves upward as described above, the upper cross member 51 rotates counterclockwise, when the vehicle 301 is seen from the front, about the first-center-swing axis UI relative to the linkage-mechanism-support part 22. At this time, the lower cross member 52 also rotates counterclockwise, when the vehicle 301 is seen from the front, about the second-center-swing axis DI relative to the linkage-mechanism-support part 22.

As described above, while the upper cross member 51 and the lower cross member 52 rotate, the upper cross member 51 and the lower cross member 52 are kept in parallel, and the left side member 53 and the right side member 54 are also kept in parallel. Accordingly, the shape of the linkage mechanism 5 changes from a rectangle to a parallelogram.

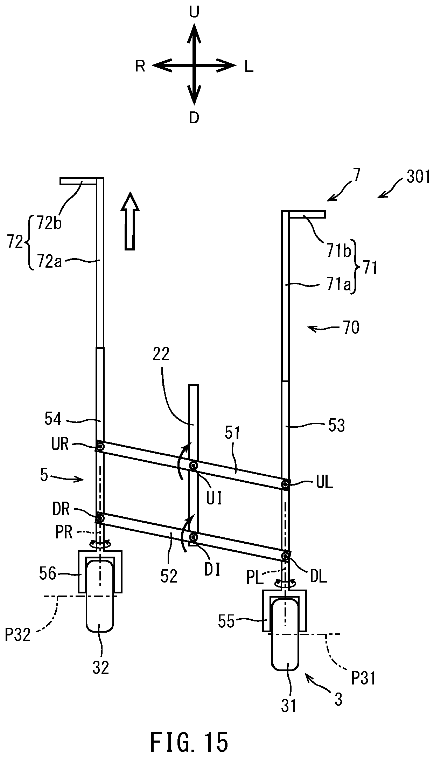

Similarly, for example, as illustrated in FIG. 15, in a case where the right front wheel 32 is located above the left front wheel 31, the right side member 54 supporting the right front wheel 32 moves upward relative to the linkage-mechanism-support part 22. When the right side member 54 moves upward as described above, the upper cross member 51 rotates clockwise, when the vehicle 301 is seen from the front, about the first-center-swing axis UI relative to the linkage-mechanism-support part 22. At this time, the lower cross member 52 also rotates clockwise, when the vehicle 301 is seen from the front, about the second-center-swing axis DI relative to the linkage-mechanism-support part 22.

As described above, while the upper cross member 51 and the lower cross member 52 rotate, the upper cross member 51 and the lower cross member 52 are kept in parallel, and the left side member 53 and the right side member 54 are also kept in parallel. Accordingly, the shape of the linkage mechanism 5 changes from a rectangle to a parallelogram.

In operation of the linkage mechanism 5 as described above, the relative positions of the left front wheel 31 and the right front wheel 32 in the top-bottom direction change without leaning in the left direction or in the right direction. The left front wheel 31 and the right front wheel 32 are also kept in upright states relative to the vehicle body 302 in operation of the linkage mechanism 5.

The left rear wheel 41 and the right rear wheel 42 are also kept in upright states relative to the vehicle body 302 in operation of the linkage mechanism 5.

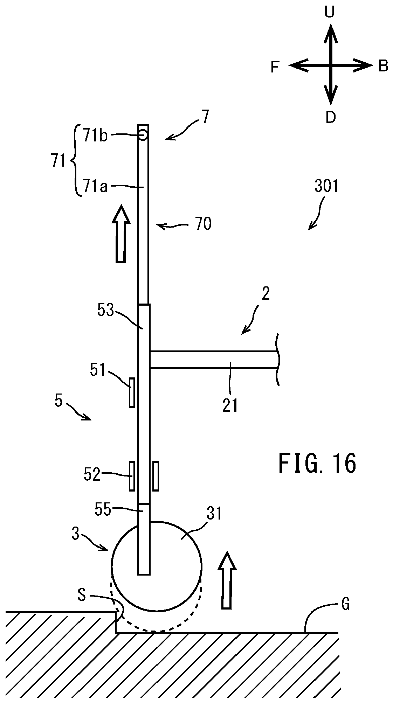

In this embodiment, the left side member 53 of the linkage mechanism 5 and the left-operation-handle bar 71a of the front-wheel-adjusting mechanism 7 are connected to each other. Thus, when an operator lifts the left operation handle 71 upward by hand (in the direction indicated by the white arrow in FIG. 14), the upper cross member 51 and the lower cross member 52 of the linkage mechanism 5 is allowed to swing with respect to the linkage-mechanism-support part 22. Accordingly, the left front wheel 31 can be moved upward by an operation of the left operation handle 71 through the left side member 53. Thus, when the left front wheel 31 is brought into contact with, for example, a step S, a force exerted by contact of the left front wheel 31 with the step S can be reduced by lifting the left operation handle 71 upward as illustrated in FIG. 16.

Similarly, in this embodiment, the right side member 54 of the linkage mechanism 5 and the right-operation-handle bar 72a of the front-wheel-adjusting mechanism 7 are connected to each other. Thus, when an operator lifts the right operation handle 72 upward by hand (in the direction indicated by the white arrow in FIG. 15), the upper cross member 51 and the lower cross member 52 of the linkage mechanism 5 is allowed to swing with respect to the linkage-mechanism-support part 22. Accordingly, the right front wheel 32 can be moved upward by an operation of the right operation handle 72 through the right side member 54. Thus, when the right front wheel 32 is brought into contact with, for example, a step S, a force exerted by contact of the right front wheel 32 with the step S can be reduced by lifting the right operation handle 72 upward.

As described above, in the vehicle 301 of this embodiment, the operator operates the pair of operation handles 70 by hand so that a load applied to the left front wheel 31 and the right front wheel 32 or the positions of the left front wheel 31 and the right front wheel 32 can be adjusted by the front-wheel-adjusting mechanism 7. Thus, when the left front wheel 31 or the right front wheel 32 is brought into contact with a step, the wheel that has contacted the step can easily go over the step.

In the manner described above, application of the configuration of this embodiment to a vehicle can obtain the vehicle 301 usable for a wider range of an environment.

In this embodiment, the left operation handle 71 is provided to be displaced linearly relative to the vehicle body 302. The right operation handle 72 is provided to be displaced linearly relative to the vehicle body 302. Accordingly, when an operator of the vehicle 301 performs an operation of linearly displacing the left operation handle 71 or the right operation handle 72 by hand, the upper cross member 51 and the lower cross member 52 of the linkage mechanism 5 are thereby allowed to swing relative to the vehicle body 302. Thus, a load applied to the left front wheel 31 and the right front wheel 32 or the positions of the left front wheel 31 and the right front wheel 32 can be adjusted by an operation of linearly displacing the left operation handle 71 or the right operation handle 72 by hand by the operator of the vehicle 301.

The pair of left and right front wheels 3 of this embodiment have configurations similar to those of the first embodiment, and thus, advantages similar to those of the first embodiment can be obtained in the fourth embodiment.

### [Fifth Embodiment]

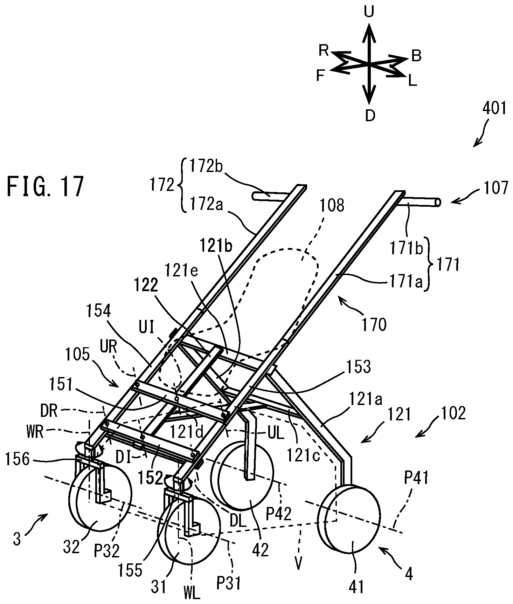

FIG. 17 is a perspective view illustrating a schematic configuration of a vehicle 401 according to a fourth embodiment. The vehicle 401 is different from the vehicle 101 of the second embodiment in that a lower end portion of a left operation handle 171 (first operation handle) is connected to an upper end portion of a left side member 153 of a linkage mechanism 105, and an upper end portion of a right operation handle 172 (second operation handle) is connected to an upper end portion of a right side member 154. In the following description, components similar to those of the second embodiment are denoted by the same reference characters and will not be described again, and components different from those of the second embodiment will be described.

The vehicle 401 includes a vehicle body 102, a pair of left and right front wheels 3, a pair of left and right rear wheels 4, the linkage mechanism 105, a front-wheel-adjusting mechanism 107, and a seat 108. The front-wheel-adjusting mechanism 107 includes a pair of operation handles 170.

The seat 108 is supported by the vehicle body 102. The seat 108 is, for example, a bucket seat on which an infant or the like can be seated. The vehicle 401 is, for example, a baby carriage for carrying an infant or the like. The seat may be of other types other than a bucket type.

The vehicle body 102 includes a body frame 121 supporting the pair of left and right rear wheels 4, and a linkage-mechanism-support part 122 supporting the linkage mechanism 105. Configurations of the body frame 121, the linkage mechanism 105, and the linkage-mechanism-support part 122 are similar to those of the second embodiment, and thus, the body frame 121, the linkage mechanism 105, and the linkage-mechanism-support part 122 will not be described in detail. A lower space V is provided under the vehicle body 102 such that the lower space V is surrounded by the pair of left and right front wheels 3 and the pair of left and right rear wheels 4. The lower space V houses baggage and parts, for example.

The pair of left and right front wheels 3 includes a left front wheel 31 and a right front wheel 32. The left front wheel 31 is supported by the left side member 153 of the linkage mechanism 105 to be rotatable about a left turning axis WL. The right front wheel 32 is supported by the right side member 154 of the linkage mechanism 105 to be rotatable about a right turning axis WR. The pair of left and right rear wheels 4 includes a left rear wheel 41 and a right rear wheel 42. Configurations of the pair of left and right front wheels 3 and the rear wheels 4 are similar to those in the second embodiment, and thus, the pair of left and right front wheels 3 and the rear wheels 4 will not be described in detail.

The pair of operation handles 170 includes a left operation handle 171 (first operation handle) and a right operation handle 172 (second operation handle).

The left operation handle 171 includes a left-operation-handle bar 171a and a left holder portion 171b. In this embodiment, the left-operation-handle bar 171a and the left holder portion 171b are integrally formed. The left-operation-handle bar 171a and the left holder portion 171b may be formed as separate parts.

The left-operation-handle bar 171a extends from an upper end portion of the left side member 153 in the linkage mechanism 105 in the same direction as a direction in which the left side member 153 extends (extension direction) so as to be continuous to the left side member 153. That is, the left-operation-handle bar 171a extends in the front-rear direction and in the top-bottom direction to gradually elevate rearward from the upper end portion of the left side member 153. A lower end portion of the left-operation-handle bar 171a is connected to the upper end portion of the left side member 153. The left-operation-handle bar may extend in a direction different from the direction in which the left side member extends, from the upper end portion of the left side member. The left-operation-handle bar and the left side member may be a united member.

The left holder portion 171b extends from an upper portion of the left-operation-handle bar 171a in a direction intersecting with the extension direction of the left-operation-handle bar 171a. The left holder portion 171b is held by the left hand of an operator.

The right operation handle 172 includes a right-operation-handle bar 172a and a right holder portion 172b. In this embodiment, the right-operation-handle bar 172a and the right holder portion 172b as integrally formed. The right-operation-handle bar 172a and the right holder portion 172b may be formed as separate parts.

The right-operation-handle bar 172a extends from an upper end portion of the right side member 154 in the linkage mechanism 105 in the same direction as a direction in which the right side member 154 extends (extension direction) so as to be continuous to the right side member 154. That is, the right-operation-handle bar 172a extends in the front-rear direction and in the top-bottom direction to gradually elevate rearward from the upper end portion of the right side member 154. A lower end portion of the right-operation-handle bar 172a is connected to the upper end portion of the right side member 154. The right-operation-handle bar may extend in a direction different from the direction in which the right side member extends, from the upper end portion of the right side member. The right-operation-handle bar and the right side member may be a united member.

The right holder portion 172b extends from an upper portion of the right-operation-handle bar 172a in a direction intersecting with the extension direction of the right-operation-handle bar 172a. The right holder portion 172b is held by the right hand of an operator.

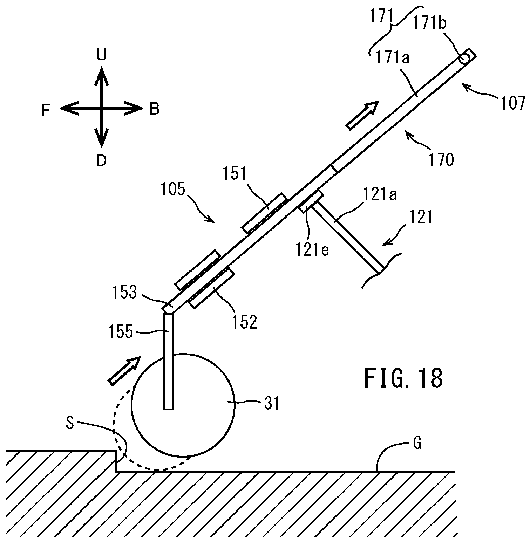

With the configuration described above, when an operator of the vehicle 401 lifts the left operation handle 171 by hand, the upper cross member 151 and the lower cross member 152 of the linkage mechanism 105 are thereby allowed to swing relative to the linkage-mechanism-support part 122. Accordingly, the left front wheel 31 can be moved upward by an operation of the left operation handle 171 through the left side member 153. Thus, when the left front wheel 31 is brought into contact with, for example, a step S, a force exerted by contact of the left front wheel 31 with the step S can be reduced by lifting the left operation handle 171 upward as illustrated in FIG. 18.

When an operator of the vehicle 401 lifts the operation handle 172 by hand, the upper cross member 151 and the lower cross member 152 of the linkage mechanism 105 are thereby allowed to swing relative to the linkage-mechanism-support part 122. Accordingly, the right front wheel 32 can be moved upward by an operation of the right operation handle 172 through the right side member 154. Thus, when the right front wheel 32 is brought into contact with, for example, a step S, a force exerted by contact of the right front wheel 32 with the step S can be reduced by lifting the right operation handle 172 upward by hand of the operator.

As described above, in the vehicle 401 of this embodiment, the operator operates the pair of operation handles 170 by hand so that a load applied to the left front wheel 31 and the right front wheel 32 or the positions of the left front wheel 31 and the right front wheel 32 can be adjusted by the front-wheel-adjusting mechanism 107. Thus, when the left front wheel 31 or the right front wheel 32 is brought into contact with the step S, the wheel in contact with the step S can easily go over the step S.

In this embodiment, the left operation handle 171 is provided to be displaced linearly relative to the vehicle body 102. The right operation handle 172 is provided to be displaced linearly relative to the vehicle body 102. Accordingly, when an operator of the vehicle 401 performs an operation of linearly displacing the left operation handle 171 or the right operation handle 172 by hand, the upper cross member 151 and the lower cross member 152 of the linkage mechanism 105 are thereby allowed to swing relative to the vehicle body 102. Thus, a load applied to the left front wheel 31 and the right front wheel 32 or the positions of the left front wheel 31 and the right front wheel 32 can be adjusted by an operation of linearly displacing the left operation handle 171 or the right operation handle 172 by hand by the operator of the vehicle 401.

In this embodiment, as described above, the first-center-swing axis UI and the second-center-swing axis DI extend in the front-rear direction and in the top-bottom direction to gradually elevate from the rear toward the front. Thus, the operator of the vehicle 401 operates the left operation handle 171 or the right operation handle 172 by hand in the extension direction as illustrated in FIG. 18 so that when the left front wheel 31 and the right front wheel 32 are brought into contact with a step, a load applied to the left front wheel 31 and the right front wheel 32 or the positions of the left front wheel 31 and the right front wheel 32 can be easily adjusted.

In addition, it is possible to prevent a force or a moment exerted on the vehicle body 102 in the left-right direction due to a force exerted on the left front wheel 31 when the left front wheel 31 is brought into contact with a step S on a road surface G as illustrated in FIG. 18, for example. As illustrated in FIG. 18, only an upward and rearward force (indicated by the white arrows in FIG. 18) is applied to the vehicle body 102 by a force exerted on the left front wheel 31 when the left front wheel 31 is brought into contact with the step S on the road surface G

In this manner, in the vehicle 401 having the configuration of this embodiment, it is possible to prevent a force of causing the left front wheel 31 and the right front wheel 32 to lean in the left direction or in the right direction from being exerted on the vehicle body 102.

In addition, as described above, the direction of the force input from the step S on the road surface G to the left front wheel 31 or the right front wheel 32 is upward and rearward. The direction in which the left side member 153, the right side member 154, and the linkage-mechanism-support part 122 extend is upward and rearward. Thus, it is possible to suppress deformation of the left side member 153, the right side member 154, and the linkage-mechanism-support part 122. Accordingly, the left front wheel 31 or the right front wheel 32 can easily go over the step S on the road surface G.

With the configuration of this embodiment as described above, it is possible to further reduce a force exerted on the vehicle body 102 while maintaining contact between an uneven road surface and the wheels.

In this embodiment, the upper cross member 151 is supported by the vehicle body 102 to be swingable about the first-center-swing axis UI without a biasing member for returning to the neutral position. The lower cross member 152 is supported by the vehicle body 102 to be swingable about the second-center-swing axis DI without a biasing member for returning to the neutral position.

The biasing member may be a member that generates an elastic restoring force, such as a coil spring, a leaf spring, or rubber, or a constituent that applies a driving force, such as an actuator.

Accordingly, there occurs no operation of returning the upper cross member 151 and the lower cross member 152 to the neutral position by the biasing member, and thus, it is possible to reduce swings of the vehicle 401 due to swings of the upper cross member 151 and the lower cross member 152. That is, it is possible to enhance followability of the left front wheel 31 and the right front wheel 32 to an uneven road surface.

The configuration described above allows the upper cross member 151 and the lower cross member 152 to operate smoothly. Accordingly, a load applied to the left front 31 and the right front wheel 32 or the positions of the left front wheel 31 and the right front wheel 32 can be adjusted.

With the configuration described above, the vehicle 401 usable for a wider range of an environment can be obtained. In addition, since a biasing member is unnecessary, the number of parts of the linkage mechanism 105 can be reduced.

The pair of left and right front wheels 3 of this embodiment have configurations similar to those of the second embodiment, and thus, advantages similar to those of the second embodiment can be obtained in this embodiment.

### [Sixth Embodiment]

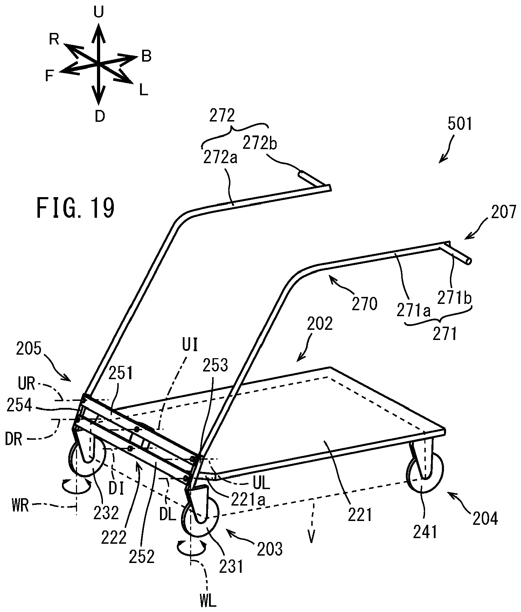

FIG. 19 is a view illustrating a schematic configuration of a vehicle 501 according to a sixth embodiment. The vehicle 501 is different from the vehicle 201 of the third embodiment in that a lower end portion of a left operation handle 271 (first operation handle) is connected to an upper end portion of a left side member 253 of a linkage mechanism 205, and a lower end portion of a right operation handle 272 (second operation handle) is connected to an upper end portion of a right side member 254. In the following description, components similar to those of the third embodiment are denoted by the same reference characters and will not be described again, and components different from those of the third embodiment will be described.

As illustrated in FIG. 19, the vehicle 501 includes a vehicle body 202, a pair of left and right front wheels 203, a pair of left and right rear wheels 204, the linkage mechanism 205, and a front-wheel-adjusting mechanism 207. The front-wheel-adjusting mechanism 207 includes a pair of operation handles 270. The vehicle 501 is a dolly capable of conveying baggage or the like placed on a carriage 221 of the vehicle body 202 described later.

The vehicle body 202 includes the carriage 221 on which baggage or the like can be placed, and a linkage-mechanism-support part 222 supporting the linkage mechanism 205. Configurations of the carriage 221, the linkage mechanism 205, and the linkage-mechanism-support part 222 are similar to those of the third embodiment, and thus, the carriage 221, the linkage mechanism 205, and the linkage-mechanism-support part 222 will not be described in detail. A lower space V is provided under the vehicle body 202 such that the lower space V is surrounded by the pair of left and right front wheels 203 and the pair of left and right rear wheels 204. The lower space V houses parts, for example.

The pair of left and right front wheels 203 includes a left front wheel 231 and a right front wheel 232. The left front wheel 231 is supported by the left side member 253 of the linkage mechanism 205 to be rotatable about a left turning axis WL extending in the top-bottom direction. The right front wheel 232 is supported by the right side member 254 of the linkage mechanism 205 to be rotatable about a right turning axis WR extending in the top-bottom direction. The pair of left and right rear wheels 204 includes a left rear wheel 241 and a right rear wheel 242. Configurations of the pair of left and right front wheels 203 and the rear wheels 204 are similar to those in the third embodiment, and thus, the pair of left and right front wheels 203 and the rear wheels 204 will not be described in detail.

The pair of operation handles 270 includes a left operation handle 271 (first operation handle) and a right operation handle 272 (second operation handle).

The left operation handle 271 includes a left-operation-handle bar 271a and a left holder portion 271b. In this embodiment, the left-operation-handle bar 271a and the left holder portion 271b are integrally formed. The left-operation-handle bar 271a and the left holder portion 271b may be formed as separate parts.

A lower portion of the left-operation-handle bar 271a extends from an upper end portion of the left side member 253 in the linkage mechanism 205 in the same direction as a direction in which the left side member 253 extends (extension direction) so as to be continuous to the left side member 253. That is, the lower portion of the left-operation-handle bar 271a extends in the front-rear direction and in the top-bottom direction to gradually elevate rearward from the upper end portion of the left side member 253. An upper portion of the left-operation-handle bar 271a extends rearward in parallel with the carriage 221, for example. A lower end portion of the left-operation-handle bar 271a is connected to the upper end portion of the left side member 253. The lower portion of the left-operation-handle bar may extend in a direction different from the direction in which the left side member extends, from the upper end portion of the left side member. The upper portion of the left-operation-handle bar may not be parallel with the carriage 221. The upper portion of the left-operation-handle bar may extend in a direction in which the lower portion of the left-operation-handle bar extends. The left-operation-handle bar and the left side member may be a united member.

The left holder portion 271b extends from the rear end portion of the left-operation-handle bar 271a in a direction intersecting with the extension direction of a rear portion of the left-operation-handle bar 271a. The left holder portion 271b is held by the left hand of an operator.

The right operation handle 272 includes a right-operation-handle bar 272a and a right holder portion 272b. In this embodiment, the right-operation-handle bar 272a and the right holder portion 272b are integrally formed. The right-operation-handle bar 272a and the right holder portion 272b may be formed as separate parts.

A lower portion of the right-operation-handle bar 272a extends from an upper end portion of the right side member 254 in the linkage mechanism 205 in the same direction as a direction in which the right side member 254 extends (extension direction) so as to be continuous to the right side member 254. That is, the lower portion of the right-operation-handle bar 272a extends in the front-rear direction and in the top-bottom direction to gradually elevate rearward from the upper end portion of the right side member 254. An upper portion of the right-operation-handle bar 272a extends rearward in parallel with the carriage 221, for example. A lower end portion of the right-operation-handle bar 272a is connected to the upper end portion of the right side member 254. The lower portion of the right-operation-handle bar may extend in a direction different from the direction in which the right side member extends, from the upper end portion of the right side member. The upper portion of the right-operation-handle bar may not be parallel with the carriage 221. The upper portion of the right-operation-handle bar may extend in a direction in which the lower portion of the right-operation-handle bar extends. The right-operation-handle bar and the right side member may be a united member.

The right holder portion 272b extends from the rear end portion of the right-operation-handle bar 272a in a direction intersecting with the extension direction of a rear portion of the rightward-operation-handle bar 272a. The right holder portion 272b is held by the right hand of an operator.

With the configuration described above, when an operator of the vehicle 501 lifts the left operation handle 271 by hand, the upper cross member 251 and the lower cross member 252 of the linkage mechanism 205 are thereby allowed to swing relative to the linkage-mechanism-support part 222. Accordingly, the left front wheel 231 can be moved upward by an operation of the left operation handle 271 through the left side member 253. Thus, when the left front wheel 231 is brought into contact with, for example, a step, a force exerted on the left front wheel 231 by contact with the step can be reduced by lifting the left operation handle 271 upward by hand of the operator.

When an operator of the vehicle 501 lifts the right operation handle 272 by hand, the upper cross member 251 and the lower cross member 252 of the linkage mechanism 205 are thereby allowed to swing relative to the linkage-mechanism-support part 222. Accordingly, the right front wheel 232 can be moved upward by an operation of the right operation handle 272 through the right side member 254. Thus, when the right front wheel 232 is brought into contact with, for example, a step, a force exerted on the right front wheel 232 by contact with the step can be reduced by lifting the right operation handle 272 upward by hand of the operator.

As described above, in the vehicle 501 of this embodiment, the operator operates the pair of operation handles 270 by hand so that a load applied to the left front wheel 231 and the right front wheel 232 or the positions of the left front wheel 231 and the right front wheel 232 can be adjusted by the front-wheel-adjusting mechanism 207. Thus, when the left front wheel 231 or the right front wheel 232 is brought into contact with a step, the wheel that has contacted the step can easily go over the step.

In this embodiment, the left operation handle 271 is provided to be displaced linearly relative to the vehicle body 202. The right operation handle 272 is provided to be displaced linearly relative to the vehicle body 202. Accordingly, when an operator of the vehicle 501 performs an operation of linearly displacing the left operation handle 271 or the right operation handle 272 by hand, the upper cross member 251 and the lower cross member 252 of the linkage mechanism 205 are thereby allowed to swing relative to the vehicle body 202. Thus, a load applied to the left front wheel 231 and the right front wheel 232 or the positions of the left front wheel 231 and the right front wheel 232 can be adjusted by an operation of linearly displacing the left operation handle 271 or the right operation handle 272 by hand of the operator of the vehicle 501.

In addition, in a manner similar to the second embodiment, since the first-center-swing axis UI and the second-center-swing axis DI extend in the front-rear direction and in the top-bottom direction to gradually elevate from the rear toward the front, it is possible to prevent generation of a force or a moment in the left-right direction on the vehicle body 202 by a force exerted on the left front wheel 231 and the right front wheel 232 from the road surface. An upward and rearward force is only applied to the vehicle body 202 by a force exerted on the left front wheel 231 and the right front wheel 232 from the road surface.

In this manner, in the vehicle 501 having the configuration of this embodiment, it is possible to further ensure prevention of a force of causing the left front wheel 231 and the right front wheel 232 to lean in the left direction or in the right direction from being exerted on the vehicle body 202.

In this embodiment, in a manner similar to the second embodiment, the upper cross member 251 is supported by the vehicle body 202 to be swingable about the first-center-swing axis UI without a biasing member for returning to the neutral position. The lower cross member 252 is supported by the vehicle body 202 to be swingable about the second-center-swing axis DI without a biasing member for returning to the neutral position.

With the configuration described above, in a manner similar to the third embodiment, the vehicle 501 usable for a wider range of an environment can be obtained.

The pair of left and right front wheels 203 of this embodiment has configurations similar to those of the third embodiment, and thus, advantages similar to those of the third embodiment can be obtained in this embodiment.

### (Other Embodiments)

The embodiments of the present teaching have been described above, but the embodiments are merely examples for carrying out the present teaching. Thus, the present teaching is not limited to the embodiments described above, and the embodiments may be modified as necessary within a range not departing from the gist of the present teaching.

In the embodiments, the vehicle 1, 101, 201, 301, 401, 501 includes the linkage mechanism 5, 105, 205 supporting the pair of left and right front wheels 3, 203. Alternatively, a vehicle may include a linkage mechanism supporting a pair of left and right rear wheels.

In the embodiments, the vehicle 1, 101, 201, 301, 401, 501 does not include a driving source for driving the wheels. Alternatively, a vehicle may include a driving source for driving the wheels.

In the embodiments, a buffer member may be provided across the upper cross member 51, 151, 251 and the lower cross member 52, 152, 252 of the linkage mechanism 5, 105, 205. The buffer member may be provided across the upper cross member 51, 151, 251 and the left side member 53, 153, 253 of the linkage mechanism 5, 105, 205. The buffer member may be provided across the lower cross member 52, 152, 252 and the right side member 54, 154, 254 of the linkage mechanism 5, 105, 205.

In the second, third, fifth, and sixth embodiments, the first-center-swing axis UI and the second-center-swing axis DI of the linkage mechanism 105, 205 extend in the front-rear direction and in the top-bottom direction so as to gradually elevate from the rear toward the front. Alternatively, the first-center-swing axis UI and the second-center-swing axis DI may extend in the front-rear direction in a manner similar to the first and fourth embodiments. In the configurations of the first and fourth embodiments, in a manner similar to the second, third, fifth, and sixth embodiments, the first-center-swing axis and the second-center-swing axis of the linkage mechanism may extend in the front-rear direction and in the top-bottom direction so as to gradually elevate from the rear toward the front.

In the second and third embodiments, the pair of front wheels 3 is caster wheels. Alternatively, only one of the pair of front wheels may be a caster wheel. The pair of front wheels may not rotate with respect to the body frame about the turning axis extending in the top-bottom direction. At least one of the pair of rear wheels may be a caster wheel. In the configuration of the first embodiment, at least one of the pair of front wheels may be a caster wheel. In the first embodiment, at least one of the pair of rear wheels may be a caster wheel.

In the second embodiment, the operation handles 106 extends from the left main frame 121a and the right main frame 121b upward and rearward so as to gradually elevate toward the rear. Alternatively, the operation handle may be configured to be switchable between a first position in which the operation handle extends upward and rearward so as to gradually elevate toward the rear and a second position in which the operation handle extends upward and forward so as to gradually elevate toward the front, with respect to the body frame. Accordingly, an operation position of an operator of the vehicle can be switched between a rear position and a front position with respect to an infant seated on the seat.

As described above, in the case of the configuration in which the operation handle is switchable between the first position and the second position, the traveling mode of the vehicle is switched between a first traveling mode in which the vehicle can travel in one direction and a second traveling mode in which the vehicle can travel in the opposite direction. That is, in the case where the operation handle is in the first position, the traveling mode of the vehicle is the first traveling mode, whereas in the case where the operation handle is in the second position, the traveling mode of the vehicle is the second traveling mode.

Thus, for example, a wheel functioning as a front wheel in the first traveling mode functions as a rear wheel in the second traveling mode. Accordingly, in the case where the position of the operation handle is switchable as described above, in the configuration of the second embodiment, if the traveling mode of the vehicle is the first traveling mode, the linkage mechanism functions in a front portion of the vehicle in the traveling direction, whereas if the traveling mode of the vehicle is the second traveling mode, the linkage mechanism functions in a rear portion of the vehicle in the traveling direction.

Alternatively, not only the pair of left and right front wheels of the vehicle, but also the pair of left and right rear wheels may be supported on the body frame by the linkage mechanism. In this case, the vehicle includes a lock mechanism that locks the linkage mechanism such that the linkage mechanism located in the rear portion of the vehicle in the traveling direction does not function depending on the position of the operation handle in switching the traveling mode of the vehicle depending on the position of the operation handle as described above. The lock mechanism locks the pair of cross members and the pair of side members in the linkage mechanism, locks the pair of cross members, or locks the pair of side members such that the cross member and the side members do not move relative to each other.

With the configuration described above, even in the case where the operation handle is switched between the first position and the second position, advantages similar to those of the second embodiment can be obtained. In switching the position of the operation handle, the operation handle is connected to the linkage mechanism supporting the wheels functioning as the front wheels. Accordingly, even in the case where the operation handle is switched between the first position and the second position, advantages similar to those of the fifth embodiment can be obtained.

The configuration capable of switching the position of the operation handle as described above may be applied to the vehicles of the first and third embodiments.

In the embodiments, each of the left front wheel 31, 231 and the right front wheel 32, 232 is a caster wheel that rotates about the turning axis extending in the top-bottom direction. Alternatively, at least one of the left front wheel or the right front wheel may be a wheel that does not rotate about the turning axis extending in the top-bottom direction. At least one of the left rear wheel or the right rear wheel may be a wheel that rotates about the turning axis extending in the top-bottom direction.

In the second embodiment, the linkage mechanism 105 is configured such that in the left-right direction of the vehicle 101, the left front wheel 31 is located closer to the left rear wheel 41 than the first-center-swing axis UI and the second-center-swing axis DI, and the right front wheel 32 is located closer to the right rear wheel 42 than the first-center-swing axis UI and the second-center-swing axis DI, when the vehicle 101 is seen from the front. Alternatively, the linkage mechanism may be configured such that in the left-right direction of the vehicle, the left front wheel is located closer to the first-center-swing axis and the second-center-swing axis than the left rear wheel, and the right front wheel is located closer to the first-center-swing axis and the second-center-swing axis than the right rear wheel, when the vehicle is seen from the front. That is, the configuration of the left front wheel and the right front wheel is not limited to the configuration of the second embodiment. In the first and third embodiments, the left front wheel and the right front wheel may be disposed in a manner similar to the second embodiment.

In the embodiments, the linkage mechanism 5, 105, 205 includes the upper cross member 51, 151, 251 located forward of the linkage-mechanism-support part 22, 122, 222. Alternatively, the linkage mechanism may include a rear upper cross member rearward of the upper cross member and the linkage-mechanism-support part. The linkage mechanism may include the front upper cross member located forward of the linkage-mechanism-support part, and the rear upper cross member located rearward of the linkage-mechanism-support part.

The configuration of each embodiment is also applicable to other vehicles such as a wheelchair. That is, the configuration of each embodiment is applicable to a vehicle of any type as long as the vehicle needs to further reduce a force exerted on the vehicle body while maintaining contact between an uneven road surface and the wheels.

In the fourth embodiment, the front-wheel-adjusting mechanism 7 includes the left operation handle 71 and the right operation handle 72. The left operation handle 71 is connected to an upper end portion of the left side member 53 of the linkage mechanism 5. The right operation handle 72 is connected to an upper portion of the right side member 54 of the linkage mechanism 5.

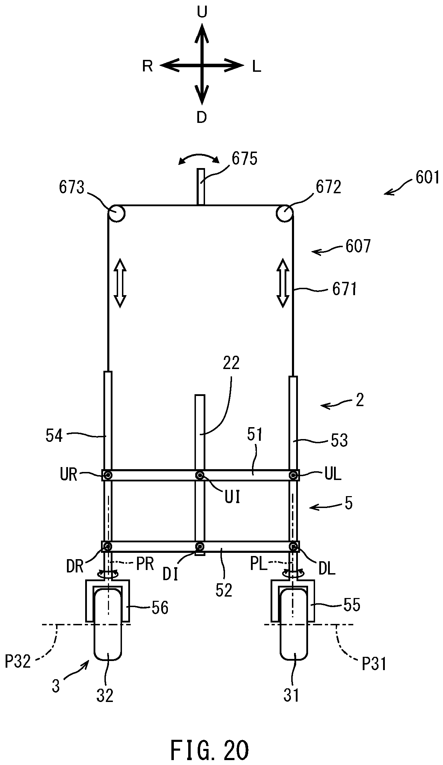

Alternatively, the front-wheel-adjusting mechanism may have any configuration as long as the left side member and the right side member of the linkage mechanism are movable in the top-bottom direction. As illustrated in FIG. 20, for example, the front-wheel-adjusting mechanism may adjust a load applied to the left front wheel 31 and the right front wheel 32 or the positions of the left front wheel 31 and the right front wheel 32 by causing the operation handle 675 to swing relative to the vehicle body 2.

A configuration illustrated in FIG. 20 will now be described. Components similar to those of the fourth embodiment are denoted by the same reference characters and will not be described again, and components different from those of the fourth embodiment will be described.

The vehicle 601 illustrated in FIG. 20 includes a front-wheel-adjusting mechanism 607. The front-wheel-adjusting mechanism 607 is disposed in a front portion of the vehicle body 2. The front-wheel-adjusting mechanism 607 includes a coupling member 671, support members 672 and 673 and an operation handle 675.

The coupling member 671 couples an upper end portion of the left side member 53 of the linkage mechanism 5 to an upper end portion of the right side member 54 of the linkage mechanism 5. The coupling member 671 is a flexible member such as a wire or a belt. The coupling member 671 is supported by the support members 672 and 673 supported by the vehicle body 2 to extend upward from the left side member 53 and the right side member 54. The support members 672 and 673 are members supporting the coupling member 671 such that the coupling member 671 is movable, such as pulleys.

The operation handle 675 is fixed to the coupling member 671. When the operation handle 675 is moved in the left direction or in the right direction, the coupling member 671 is also thereby moved in the left direction or in the right direction. Accordingly, the left side member 53 and the right side member 54 coupled to the coupling member 671 move in the top-bottom direction, and the upper cross member 51 and the lower cross member 52 of the linkage mechanism 5 swing relative to the linkage-mechanism-support part 22.

Thus, the front-wheel-adjusting mechanism 607 can adjust a load applied to the left front wheel 31 and the right front wheel 32 or positions of the left front wheel 31 and the right front wheel 32.

The front-wheel-adjusting mechanism as illustrated in FIG. 20 is also applicable to the configurations of the fifth and sixth embodiments.

In the fourth through sixth embodiments, the left operation handle 71, 171, 271 of the front-wheel-adjusting mechanisms 7, 107, 207 is connected to the left side member 53, 153, 253 of the linkage mechanism 5, 105, 205. The right operation handle 72, 172, 272 of the front-wheel-adjusting mechanisms 7, 107, 207 is connected to the right side member 54, 154, 254 of the linkage mechanism 5, 105, 205.

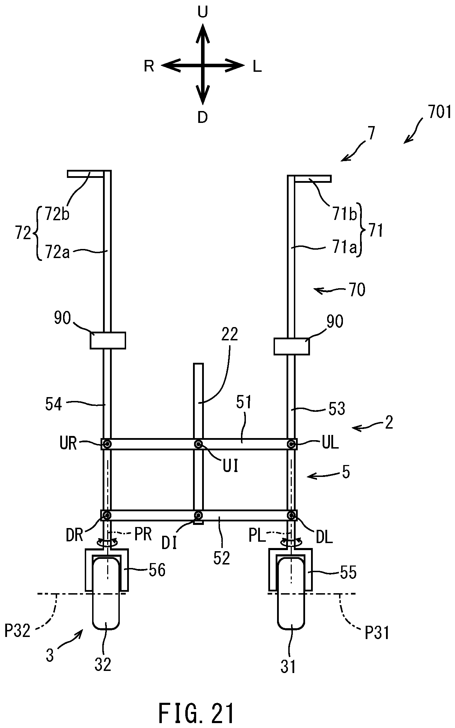

Alternatively, as illustrated in FIG. 21, each of the left operation handle 71 and the right operation handle 72 may be connected to the linkage mechanism 5 via a clutch mechanism 90. The clutch mechanism 90 is configured such that the left and right operation handles 71 and 72 and the linkage mechanism 5 are switchable between connection and disconnection. If the left operation handle 71 and the right operation handle 72 are disconnected from the linkage mechanism 5, the clutch mechanism 90 connects the left operation handle 71 and the right operation handle 72 to the vehicle body 2. In FIG. 21, character 701 denotes a vehicle.

With the configuration described above, it is possible to perform switching between the state where the operation handle of the front-wheel-adjusting mechanism is connected to the linkage mechanism and the state where the operation handle of the front-wheel-adjusting mechanism is disconnected from the linkage mechanism, depending on an environment of use of the vehicle. Accordingly, it is possible to perform switching between presence or absence of adjustment of the load applied to the left front wheel and the right front wheel or presence or absence of adjustment of the positions of the left front wheel and the right front wheel, depending on an environment of use of the vehicle. As a result, an environment in which the vehicle is usable can be enlarged.

In the fourth through sixth embodiments, the lower end portion of the left operation handle 71, 171, 271 is connected to the upper end portion of the left side member 53, 153, 253 of the linkage mechanism 5, 105, 205. The lower end portion of the right operation handle 72, 172, 272 is connected to the upper end portion of the right side member 54, 154, 254 of the linkage mechanism 5, 105, 205. Alternatively, the left operation handle may be connected to any portion of the left side member as long as the left operation handle is connected to the left side member of the linkage mechanism. The right operation handle may be connected to any portion of the right side member as long as the right operation handle is connected to the right side member of the linkage mechanism.

In the fourth through sixth embodiments, the left operation handle 71, 171, 271 includes the left holder portion 71b, 171b, 271b. The right operation handle 72, 172, 272 includes the right holder portion 72b, 172b, 272b. Alternatively, the left operation handle does not need to include the left holder portion. The right operation handle does not need to include the right holder portion.

### Reference Signs List

1, 101, 201, 301, 401, 501, 601, 701, 1001, 2001 vehicle
2, 102, 202, 302, 1002 vehicle body
3, 203 front wheel
4, 204 rear wheel
5, 105, 205 linkage mechanism (wheel-tilt-suppressing mechanism)
6, 70, 106, 170, 206, 270, 675 operation handle
7, 107, 207, 607 front-wheel-adjusting mechanism
21, 121 body frame
22, 122, 222 linkage-mechanism-support part
31, 231, 1031, 2031 left front wheel
32, 232, 1032, 2032 right front wheel
41, 241 left rear wheel
42, 242 right rear wheel
51, 151, 251 upper cross member (first swing lever)
52, 152, 252 lower cross member (second swing lever)
53, 153, 253 left side member (left-front-wheel support)
54, 154, 254 right side member (right-front-wheel support)
55, 155 left-front-wheel-supporting part
56, 156 right-front-wheel-supporting part
60 tie rod
61 intermediate joint
61a intermediate-joint-rotation-axis portion
62 left joint
62a left-joint-rotation-axis portion
63 right joint
63a right-joint-rotation-axis portion
71, 171, 271 left operation handle
71a, 171a, 271a left-operation-handle bar
71b, 171b, 271b left holder portion
72, 172, 272 right operation handle
72a, 172a, 272a right-operation-handle bar
72b, 172b, 272b right holder portion
90 clutch mechanism
106a holder portion
108 seat
121a left main frame
121b right main frame
121c lower connecting frame
121d reinforcing frame
221 carriage
223 second left support portion
224 second right support portion
671 coupling member
672, 673 support member
UI first-center-swing axis
DI second-center-swing axis
UL first-left-swing axis
DL second-left-swing axis
UR first-right-swing axis
DR second-right-swing axis
P31 left-front-wheel-rotation axis
P32 right-front-wheel-rotation axis
P41 left-rear-wheel-rotation axis
P42 right-rear-wheel-rotation axis
PL, WL left turning axis (turning axis)
PR, WR right turning axis (turning axis)
V lower space
T coupling member
X obstacle
S step (obstacle)
M barycenter

## Claims

1. A vehicle including:
a vehicle body configured to stand on its own while the vehicle is stopped and configured not to lean while the vehicle is turning on a flat road surface,
a left rear wheel and a right rear wheel supported by the vehicle body, a traveling direction of each of the left rear wheel and the right rear wheel being fixed in a front-rear direction, and
a left front wheel and a right front wheel supported by the vehicle body and each configured to be rotatable about a turning axis extending in a top-bottom direction, the vehicle comprising
a wheel-tilt-suppressing mechanism including
a first swing lever that is a member extending in a left-right direction, the first swing lever having a center portion in the left-right direction supported by the vehicle body to be swingable about a first-center-swing axis, the first-center-swing axis extending in the front-rear direction of the vehicle body,
a second swing lever that is a member extending in the left-right direction, the second swing lever having a center portion in the left-right direction located below the first swing lever and supported by the vehicle body to be swingable about a second-center-swing axis, the second-center-swing axis extending in the front-rear direction of the vehicle body,
a left-front-wheel support that is a member extending in the top-bottom direction, the left-front-wheel support being supported by a left end portion of the first swing lever to be swingable about a first-left-swing axis extending in the front-rear direction of the vehicle body, the left-front-wheel support being supported by a left end portion of the second swing lever to be swingable about a second-left-swing axis extending in the front-rear direction of the vehicle body, the left-front-wheel support supporting the left front wheel, and
a right-front-wheel support that is a member extending in the top-bottom direction, the right-front-wheel support being supported by a right end portion of the first swing lever to be swingable about a first-right-swing axis extending in the front-rear direction of the vehicle body, the right-front-wheel support being supported by a right end portion of the second swing lever to be swingable about a second-right-swing axis extending in the front-rear direction of the vehicle body, the right-front-wheel support supporting the right front wheel, wherein
the wheel-tilt-suppressing mechanism is configured to deform such that the left front wheel and the right front wheel do not lean in a left direction or in a right direction when the left front wheel or the right front wheel is displaced upward or downward with respect to the vehicle body, and
the vehicle is configured such that in a case where one of the left front wheel or the right front wheel rides on an obstacle in a traveling direction in a state where each of the left front wheel and the right front wheel is rotating about the turning axis during leftward or rightward turning of the vehicle, the left front wheel, the right front wheel, the left rear wheel, and the right rear wheel are kept in upright states with respect to the vehicle body and the vehicle body and the turning axis do not lean.

2. The vehicle according to claim 1, wherein
each of the left-front-wheel support and the right-front-wheel support is movable in the top-bottom direction with respect to the vehicle body.

3. The vehicle according to claim 1 or 2, wherein
each of the first-center-swing axis of the first swing lever and the second-center-swing axis of the second swing lever extends in the front-rear direction and in the top-bottom direction to gradually elevate from rear toward front of the vehicle body, and
the wheel-tilt-suppressing mechanism is configured to suppress conversion of a force input from a road surface to the left front wheel or the right front wheel to a force in the left-right direction and to allow conversion of the force input to the left front wheel or the right front wheel to an upward and rearward force.

4. The vehicle according to any one of claims 1 to 3, wherein
the wheel-tilt-suppressing mechanism
is configured such that when the vehicle is seen from the front, the left front wheel is located closer to the left rear wheel than the first-center-swing axis and the second-center-swing axis, and the right front wheel is located closer to the right rear wheel than the first-center-swing axis and the second-center-swing axis, and
is configured to suppress a change in a distance between the left front wheel and the right front wheel in the left-right direction.

5. The vehicle according to any one of claims 1 to 4, wherein
the first swing lever is supported by the vehicle body to be swingable about the first-center-swing axis without a biasing member for returning to a neutral position, and
the second swing lever is supported by the vehicle body to be swingable about the second-center-swing axis without a biasing member for returning to a neutral position.

6. The vehicle according to any one of claims 1 to 5, wherein
the left front wheel is a caster left front wheel rotatable about a left turning axis extending in the top-bottom direction with respect to the vehicle body, and
the right front wheel is a caster right front wheel rotatable about a right turning axis extending in the top-bottom direction with respect to the vehicle body.

7. The vehicle according to any one of claims 1 to 6, further comprising
a front-wheel-adjusting mechanism including an operation handle, the operation handle being operable by hand of an operator of the vehicle and connected to the wheel-tilt-suppressing mechanism such that the first swing lever and the second swing lever are caused to swing by an operation of the operator, the front-wheel-adjusting mechanism being configured to adjust a load applied to the left front wheel and the right front wheel or positions of the left front wheel and the right front wheel by causing the first swing lever and the second swing lever to swing by the operation of the operation handle by the operator.

8. The vehicle according to claim 7, wherein
the operation handle includes a first operation handle and a second operation handle,
the first operation handle is connected to a left portion of the first swing lever and a left portion of the second swing lever,
the second operation handle is connected to a right portion of the first swing lever and a right portion of the second swing lever, and
the front-wheel-adjusting mechanism is configured to adjust a load applied to the left front wheel and the right front wheel or positions of the left front wheel and the right front wheel by causing the first swing lever and the second swing lever to swing by an operation of at least one of the first operation handle or the second operation handle by the operator.

9. The vehicle according to claim 7 or 8, wherein
the front-wheel-adjusting mechanism is configured to move the left front wheel and the right front wheel in the top-bottom direction and in the front-rear direction by an operation of the operation handle by the operator.
